(19) Europäisches Patentamt
European Patent Office
Office européen des brevets

(11) **EP 4 280 791 A1**

(12) **EUROPEAN PATENT APPLICATION**
published in accordance with Art. 153(4) EPC

(43) Date of publication:
**22.11.2023 Bulletin 2023/47**

(21) Application number: **22739766.8**

(22) Date of filing: **14.01.2022**

(51) International Patent Classification (IPC):
**H04W 74/08** *(2009.01)*   **H04W 74/00** *(2009.01)*
**H04W 72/12** *(2023.01)*   **H04W 72/04** *(2023.01)*
**H04L 5/00** *(2006.01)*

(52) Cooperative Patent Classification (CPC):
**H04L 5/00; H04W 72/04; H04W 72/12;
H04W 74/00; H04W 74/08**

(86) International application number:
**PCT/KR2022/000734**

(87) International publication number:
**WO 2022/154574 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.01.2021 KR 20210006855**

(71) Applicant: **LG Electronics Inc.**
**Yeongdeungpo-gu**
**Seoul 07336 (KR)**

(72) Inventors:
• **KIM, Jaehyung**
**Seoul 06772 (KR)**
• **LEE, Youngdae**
**Seoul 06772 (KR)**
• **YANG, Suckchel**
**Seoul 06772 (KR)**
• **HWANG, Seunggye**
**Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD FOR TRANSMITTING AND RECEIVING MSG4 IN WIRELESS COMMUNICATION SYSTEM AND DEVICE THEREFOR**

(57)    A method of transmitting and receiving a message (Msg)4 in a wireless communication system and a device therefor are disclosed. The method performed by a reduced capability (RedCap) user equipment (UE) comprises transmitting a random access preamble to a base station, receiving a random access response from the base station based on the random access preamble, transmitting, to the base station, a Msg3 physical uplink shared channel (PUSCH) in a first frequency hop based on the random access response, performing a frequency retuning for a bandwidth of the RedCap UE, transmitting, to the base station, the Msg3 PUSCH in a second frequency hop of the bandwidth of the RedCap UE, and receiving the Msg4 from the base station based on the Msg3 PUSCH.

**FIG. 15**

EP 4 280 791 A1

**Description**

## TECHNICAL FIELD

The present disclosure relates to a wireless communication system, and more particularly to a method of transmitting and receiving a message (Msg)4 and a device therefor.

## BACKGROUND

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

A reduced bandwidth is considered as a main feature of a reduced capability (RedCap) user equipment (UE). In particular, in the case of the RedCap UE having the feature, PUSCH/PUCCH frequency hopping in an initial LTL BWP may exceed a reduced bandwidth of the UE.

## SUMMARY

The present disclosure provides a method of performing a random access procedure (or initial access procedure) in a situation where an initial LTL BWP is greater than a bandwidth of a RedCap UE, and a device therefor.

The present disclosure also provides a method for a RedCap LTE to perform a random access procedure in a communication environment where the RedCap LTE and a normal LTE (e.g., a LTE not the RedCap LTE) coexist, and a device therefor.

The present disclosure also provides a method of transmitting and receiving a PUSCH and/or a PUCCH (or HARQ-ACK information) using frequency retuning when an initial UL BWP is greater than a bandwidth of a RedCap LTE, and a device therefor.

The present disclosure also provides a method of inserting a gap between frequency hops upon frequency hopping of a PUSCH and/or a PUCCH, and a device therefor.

The present disclosure also provides a method of skipping all/some of frequency hops upon frequency hopping of a PUSCH and/or a PUCCH, and a device therefor.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

In one aspect of the present disclosure, there is provided a method of a reduced capability (RedCap) user equipment (UE) for receiving a message (Msg)4 in a wireless communication system. The method comprises transmitting a random access preamble to a base station, based on the random access preamble, receiving a random access response from the base station, based on the random access response, transmitting, to the base station, a Msg3 physical uplink shared channel (PUSCH) in a first frequency hop, performing a frequency retuning for a bandwidth of the RedCap UE, transmitting, to the base station, the Msg3 PUSCH in a second frequency hop of the bandwidth of the RedCap UE, wherein i) a gap is inserted between the first frequency hop and the second frequency hop, or ii) at least one symbol of the first frequency hop or at least one symbol of the second frequency hop is skipped, and based on the Msg3 PUSCH, receiving the Msg4 from the base station.

The bandwidth of the RedCap UE may be less than a bandwidth of an initial uplink bandwidth part (BWP).

The bandwidth of the RedCap UE may be a maximum bandwidth supported by the RedCap UE.

The gap may be configured through system information or the random access response.

Based on last at least one symbol of the first frequency hop including a demodulation reference signal (DMRS) symbol, and first at least one symbol of the second frequency hop not including the DMRS symbol, the first at least one symbol of the second frequency hop may be skipped.

Based on last at least one symbol of the first frequency hop not including a demodulation reference signal (DMRS) symbol, and first at least one symbol of the second frequency hop including the DMRS symbol, the last at least one symbol of the first frequency hop may be skipped.

The method may further comprise transmitting, to the base station, a physical uplink control channel (PUCCH) for the Msg4 in a first PUCCH frequency hop, performing the frequency retuning for the bandwidth of the RedCap UE, and transmitting, to the base station, the PUCCH in a second PUCCH frequency hop of the bandwidth of the RedCap UE, wherein i) a gap may be inserted between the first PUCCH frequency hop and the second PUCCH frequency hop, or ii) at least one symbol of the first PUCCH frequency hop or at least one symbol of the second PUCCH frequency hop may be skipped.

The PUCCH may include hybrid automatic repeat request-acknowledgement (HARQ-ACK) information for the Msg4.

In another aspect of the present disclosure, there is provided a reduced capability (RedCap) user equipment (UE) configured to receive a message (Msg)4 in a wireless communication system, the RedCap UE comprising at least one transceiver, at least one processor, and at least one memory operably connected to the at least one processor, wherein the at least one memory is configured to store instructions performing operations based on being executed by the at least one processor, wherein the operations comprise transmitting a random access preamble to a base station, based on the random access preamble, receiving a random access response from the base station, based on the random access response, transmitting, to the base station, a Msg3 physical uplink shared channel (PUSCH) in a first frequency hop, performing a frequency retuning for a bandwidth of the RedCap UE, transmitting, to the base station, the Msg3 PUSCH in a second frequency hop of the bandwidth of the RedCap UE, wherein i) a gap is inserted between the first frequency hop and the second frequency hop, or ii) at least one symbol of the first frequency hop or at least one symbol of the second frequency hop is skipped, and based on the Msg3 PUSCH, receiving the Msg4 from the base station.

In another aspect of the present disclosure, there is provided a method of a base station for transmitting a message (Msg)4 in a wireless communication system, the method comprising receiving a random access preamble from a reduced capability (RedCap) user equipment (UE), based on the random access preamble, transmitting a random access response to the RedCap UE, based on the random access response, receiving, from the RedCap UE, a Msg3 physical uplink shared channel (PUSCH) in a first frequency hop, wherein a frequency retuning for a bandwidth of the RedCap UE is performed, receiving, from the RedCap UE, the Msg3 PUSCH in a second frequency hop of the bandwidth of the RedCap UE, wherein i) a gap is inserted between the first frequency hop and the second frequency hop, or ii) at least one symbol of the first frequency hop or at least one symbol of the second frequency hop is skipped, and based on the Msg3 PUSCH, transmitting the Msg4 to the RedCap UE.

The bandwidth of the RedCap UE may be less than a bandwidth of an initial uplink bandwidth part (BWP).

The bandwidth of the RedCap UE may be a maximum bandwidth supported by the RedCap UE.

The gap may be configured through system information or the random access response.

Based on last at least one symbol of the first frequency hop including a demodulation reference signal (DMRS) symbol, and first at least one symbol of the second frequency hop not including the DMRS symbol, the first at least one symbol of the second frequency hop may be skipped.

Based on last at least one symbol of the first frequency hop not including a demodulation reference signal (DMRS) symbol, and first at least one symbol of the second frequency hop including the DMRS symbol, the last at least one symbol of the first frequency hop may be skipped.

The method may further comprise receiving, from the RedCap UE, a physical uplink control channel (PUCCH) for the Msg4 in a first PUCCH frequency hop, wherein the frequency retuning for the bandwidth of the RedCap UE is performed, and receiving, from the RedCap UE, the PUCCH in a second PUCCH frequency hop of the bandwidth of the RedCap UE, wherein i) a gap may be inserted between the first PUCCH frequency hop and the second PUCCH frequency hop, or ii) at least one symbol of the first PUCCH frequency hop or at least one symbol of the second PUCCH frequency hop may be skipped.

The PUCCH may include hybrid automatic repeat request-acknowledgement (HARQ-ACK) information for the Msg4.

In another aspect of the present disclosure, there is provided a base station configured to transmit a message (Msg)4 in a wireless communication system, the base station comprising at least one transceiver, at least one processor, and at least one memory operably connected to the at least one processor, wherein the at least one memory is configured to store instructions performing operations based on being executed by the at least one processor, wherein the operations comprise receiving a random access preamble from a reduced capability (RedCap) user equipment (UE), based on the random access preamble, transmitting a random access response to the RedCap UE, based on the random access response, receiving, from the RedCap UE, a Msg3 physical uplink shared channel (PUSCH) in a first frequency hop, wherein a frequency retuning for a bandwidth of the RedCap UE is performed, receiving, from the RedCap UE, the Msg3 PUSCH in a second frequency hop of the bandwidth of the RedCap UE, wherein i) a gap is inserted between the first frequency hop and the second frequency hop, or ii) at least one symbol of the first frequency hop or at least one symbol of the second frequency hop is skipped, and based on the Msg3 PUSCH, transmitting the Msg4 to the RedCap UE.

In another aspect of the present disclosure, there is provided a processing apparatus configured to control a reduced capability (RedCap) user equipment (UE) to receive a message (Msg)4 in a wireless communication system, the processing apparatus comprising at least one processor, and at least one memory operably connected to the at least one processor, wherein the at least one memory is configured to store instructions performing operations based on being executed by the at least one processor, wherein the operations comprise transmitting a random access preamble to a base station, based on the random access preamble, receiving a random access response from the base station, based on the random access response, transmitting, to the base station, a Msg3 physical uplink shared channel (PUSCH) in a first frequency hop, performing a frequency retuning for a bandwidth of the RedCap UE, transmitting, to the base station, the Msg3 PUSCH in a second frequency hop of the bandwidth of the RedCap LTE, wherein i) a gap is inserted between the first frequency hop and the second frequency hop, or ii) at least one symbol of the first frequency hop or at least one symbol of the second frequency hop is skipped, and based on the Msg3 PUSCH, receiving the Msg4 from the base station.

In another aspect of the present disclosure, there is provided a computer readable storage medium storing at least one instruction, wherein the at least one instruction is configured to allow at least one processor to control operations based on being executed by the at least one processor, wherein the operations comprise transmitting a random access preamble to a base station, based on the random access preamble, receiving a random access response from the base station, based on the random access response, transmitting, to the base station, a message (Msg)3 physical uplink shared channel (PUSCH) in a first frequency hop, performing a frequency retuning for a bandwidth of a reduced capability (RedCap) user equipment (UE), transmitting, to the base station, the Msg3 PUSCH in a second frequency hop of the bandwidth of the RedCap LTE, wherein i) a gap is inserted between the first frequency hop and the second frequency hop, or ii) at least one symbol of the first frequency hop or at least one symbol of the second frequency hop is skipped, and based on the Msg3 PUSCH, receiving a Msg4 from the base station.

The present disclosure has an effect of performing a random access procedure (or an initial access procedure) by minimizing an impact of NR network (or base station) configuration in a situation where an initial UL BWP is greater than a bandwidth of a RedCap UE.

The present disclosure also has an effect of improving resource efficiency and implementing a low-latency and high-reliability communication system in a communication environment in which a RedCap UE and a normal UE coexist.

The present disclosure also has an effect of an effect of transmitting and receiving a PUSCH and/or a PUCCH (or HARQ-ACK information) using frequency retuning when an initial UL BWP is greater than a bandwidth of a RedCap UE.

The present disclosure also has an effect of securing time for frequency retuning and improving communication reliability by inserting a gap between frequency hops upon frequency hopping of a PUSCH and/or a PUCCH.

The present disclosure also has an effect of securing time for frequency retuning and improving communication reliability by skipping all/some of frequency hops upon frequency hopping of a PUSCH and/or a PUCCH.

Effects that could be achieved with the present disclosure are not limited to those that have been described hereinabove merely by way of example, and other effects and advantages of the present disclosure will be more clearly understood from the following description by a person skilled in the art to which the present disclosure pertains.

## BRIEF DESCRIPTION OF THE DRAWINGS

The accompany drawings, which are included to provide a further understanding of the disclosure and are incorporated on and constitute a part of this disclosure illustrate embodiments of the disclosure and together with the description serve to explain the principles of the disclosure.

FIG. 1 is a diagram illustrating an example of an overall system structure of NR to which a method proposed in the disclosure may be applied.

FIG. 2 illustrates a relationship between an uplink frame and a downlink frame in a wireless communication system to which a method proposed in the disclosure may be applied.

FIG. 3 illustrates an example of a frame structure in an NR system.

FIG. 4 illustrates an example of a resource grid supported by a wireless communication system to which a method proposed in the disclosure may be applied.

FIG. 5 illustrates a slot structure of an NR frame to which a method described in the present disclosure is applicable.

FIG. 6 illustrates examples of a resource grid per antenna port and numerology to which a method described in the present disclosure is applicable.

FIG. 7 illustrates physical channels and general signal transmission used in a 3GPP system.

FIG. 8 illustrates an SSB structure.

FIG. 9 illustrates SSB transmission.

FIG. 10 illustrates an example of a random access procedure.

FIG. 11 illustrates a 2-step RACH procedure.

FIG. 12 illustrates a flow chart of a procedure of reporting device type information to a base station.

FIG. 13 illustrates an example of a method of inserting a gap between PUSCH/PUCCH frequency hops.

FIG. 14 illustrates an example of a method of performing a skip between PUSCH/PUCCH frequency hops.

FIG. 15 is a flow chart illustrating an operation method of a UE described in the present disclosure.

FIG. 16 is a flow chart illustrating an operation method of a base station described in the present disclosure.

FIG. 17 illustrates a communication system (1) applied to the disclosure.

FIG. 18 illustrates a wireless device which may be applied to the disclosure.

FIG. 19 illustrates another example of a wireless device applied to the disclosure.

FIG. 20 illustrates a portable device applied to the disclosure.

## DETAILED DESCRIPTION

Reference will now be made in detail to embodiments of the disclosure, examples of which are illustrated in the accompanying drawings. A detailed description to be disclosed below together with the accompanying drawing is to describe exemplary embodiments of the disclosure and not to describe a unique embodiment for carrying out the disclosure. The detailed description below includes details to provide a complete understanding of the disclosure. However, those skilled in the art know that the disclosure may be carried out without the details.

In some cases, in order to prevent a concept of the disclosure from being ambiguous, known structures and devices may be omitted or illustrated in a block diagram format based on core functions of each structure and device.

Hereinafter, downlink (DL) means communication from the base station to the terminal and uplink (LTL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the disclosure is described based on the 3GPP communication system (e.g., LTE-A or NR), but the technical spirit of the disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a detailed standard document number. The LTE/NR may be collectively referred to as the 3GPP system. Matters disclosed in a standard document opened before the disclosure may be referred to for a background art, terms, omissions, etc., used for describing the disclosure. For example, the following documents may be referred to.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/LTE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billions. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of mega bits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window.

In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver may drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system may support remote treatment providing clinical treatment at a distant place. This helps to reduce a barrier for the distance and may improve access to medical services which are not continuously used at remote farming areas. Furthermore, this is used to save life in important treatment and an emergency condition. A radio sensor network based on mobile communication may provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In addition, use cases for regions spanning mMTC and eMBB, or mMTC and URLLC, are considered important.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

## Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

## Overview of system

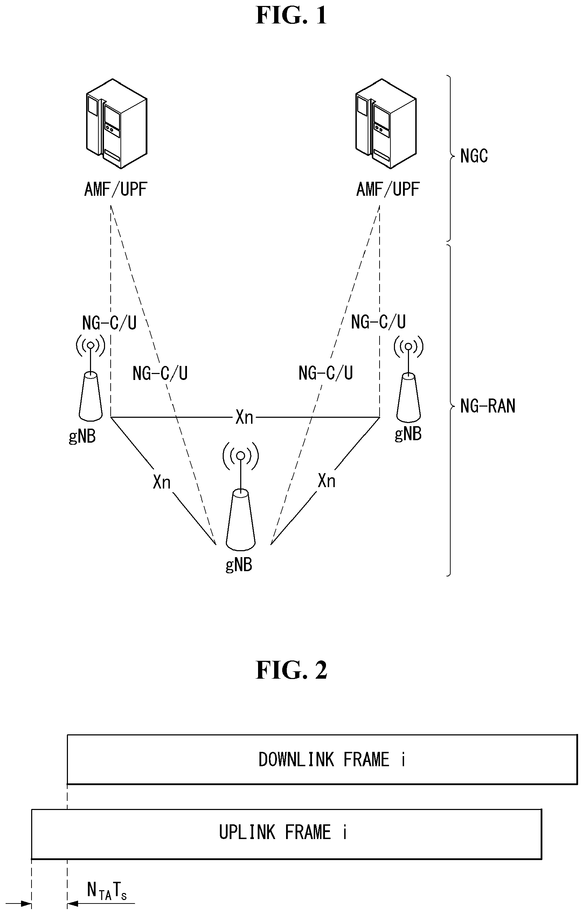

FIG. 1 illustrates an example of an overall structure of a NR system to which a method proposed in the disclosure is applicable..

Referring to FIG. 1, an NG-RAN consists of gNBs that provide an NG-RA user plane (new AS sublayer/PDCP/RLC/MAC/PHY) and control plane (RRC) protocol terminations for a user equipment (UE).

The gNBs are interconnected with each other by means of an Xn interface.

The gNBs are also connected to an NGC by means of an NG interface.

More specifically, the gNBs are connected to an access and mobility management function (AMF) by means of an N2 interface and to a user plane function (UPF) by means of an N3 interface.

## New Rat (NR) Numerology and Frame Structure

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^\mu \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as frequency ranges of two types (FR1 and FR2). FR1 and FR2 may be configured as shown in Table 2 below. Further, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ ms. The radio frame is composed of ten subframes each having a section of $T_{sf} = (\Delta f_{max} N_f/1000) \cdot T_s = 1$ ms. In this case, there may be a set of UL frames and a set of DL frames.

FIG. 2 illustrates a relation between an uplink frame and a downlink frame in a wireless communication system to which a method proposed in the disclosure is applicable.

As illustrated in FIG. 2, uplink frame number i for transmission from a user equipment (UE) shall start $T_{TA}$ = $N_{TA}T_s$ before the start of a corresponding downlink frame at the corresponding UE.

Regarding the numerology $\mu$, slots are numbered in increasing order of $n_s^\mu \in \left\{ 0,\ldots, N_{subframe}^{slots,\mu} - 1 \right\}$ within a subframe and are numbered in increasing order of $n_{s,f}^\mu \in \left\{ 0,\ldots, N_{frame}^{slots,\mu} - 1 \right\}$ within a radio frame. One slot consists of consecutive OFDM symbols of $N_{symb}^\mu$, and $N_{symb}^\mu$ is determined depending on a numerology used and slot configuration. The start of slots $n_s^\mu$ in a subframe is aligned in time with the start of OFDM symbols $n_s^\mu N_{symb}^\mu$ in the same subframe.

Not all LTEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame, \mu}$ of slots per radio frame, and the number $N_{slot}^{subframe, \mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

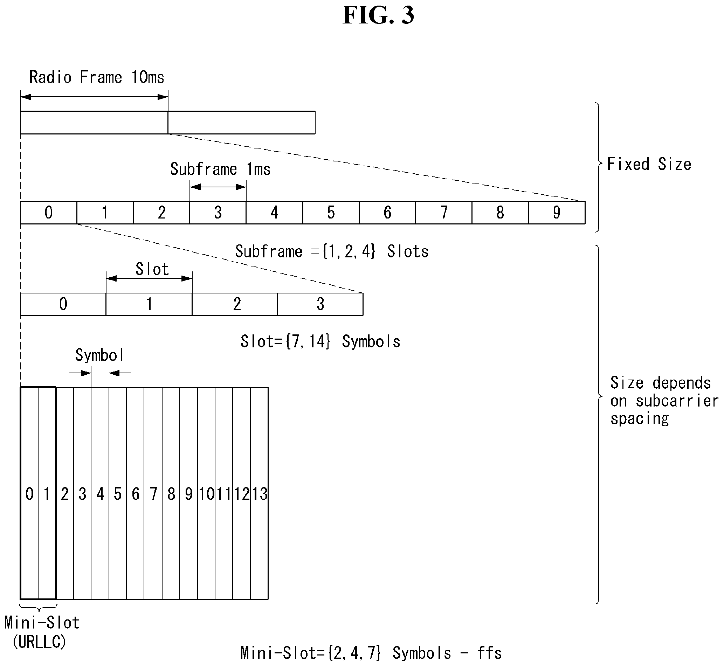

FIG. 3 illustrates an example of a frame structure in a NR system. FIG. 3 is merely for convenience of explanation and does not limit the scope of the disclosure.

In Table 4, in case of $\mu$=2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

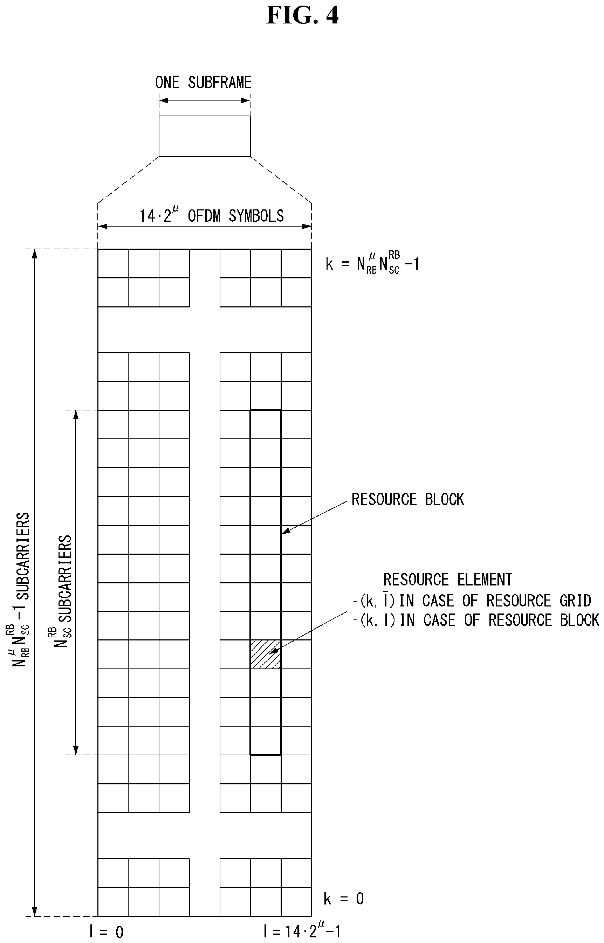

FIG. 4 illustrates an example of a resource grid supported in a wireless communication system to which a method proposed in the disclosure is applicable.

Referring to FIG. 4, a resource grid consists of $N_{\text{RB}}^{\mu} N_{\text{sc}}^{\text{RB}}$ subcarriers on a frequency domain, each subframe consisting of $14 \cdot 2^{\mu}$ OFDM symbols, but the disclosure is not limited thereto.

In the NR system, a transmitted signal is described by one or more resource grids, consisting of $N_{\text{RB}}^{\mu} N_{\text{sc}}^{\text{RB}}$ subcarriers, and $2^{\mu} N_{\text{symb}}^{(\mu)}$ OFDM symbols, where $N_{\text{RB}}^{\mu} \leq N_{\text{RB}}^{\max,\mu}$. $N_{\text{RB}}^{\max,\mu}$ denotes a maximum transmission bandwidth and may change not only between numerologies but also between uplink and downlink.

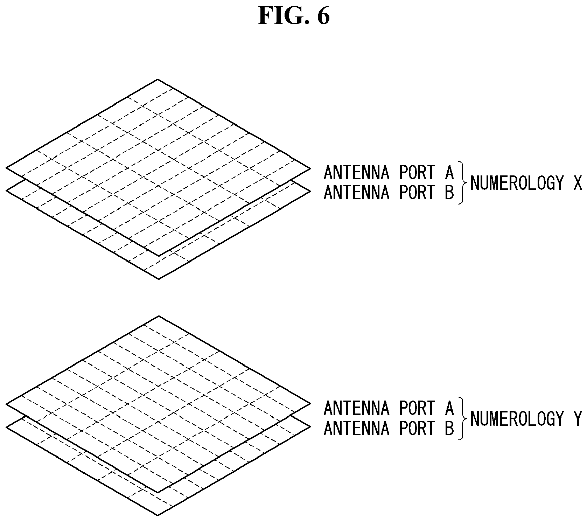

In this case, as illustrated in FIG. 6, one resource grid may be configured per numerology $\mu$ and antenna port p.

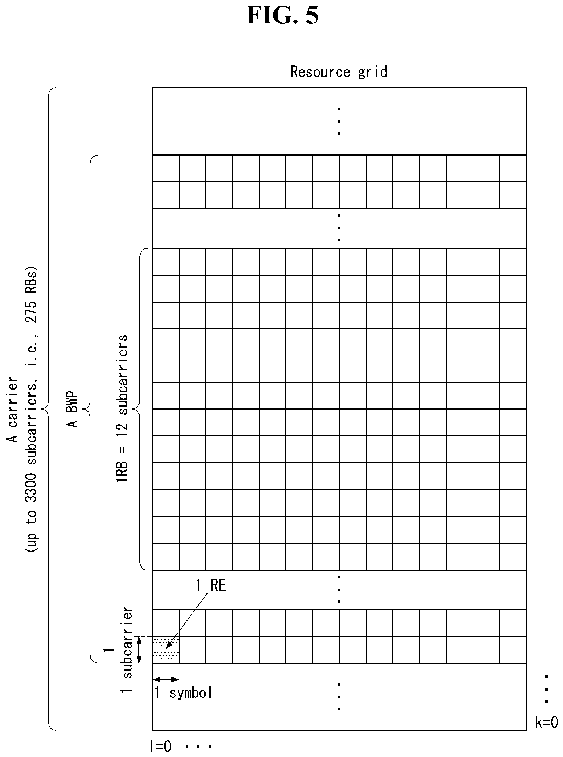

FIG. 5 illustrates a slot structure of an NR frame to which a method described in the present disclosure is applicable.

A slot includes a plurality of symbols in a time domain. For example, in a normal CP, one slot includes 7 symbols, and in an extended CP, one slot includes 6 symbols. A carrier includes a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) RBs ((P)RBs) in the frequency domain, and the BWP may correspond to one numerology (e.g., SCS, CP length, etc.). A carrier may include up to N BWPs (e.g., 5 BWPs). Data communication may be performed via an activated BWP, and only one BWP may be activated for one UE. Each element in a resource grid may be referred to as a resource element (RE), and one complex symbol may be mapped to each element.

FIG. 6 illustrates examples of a resource grid per antenna port and numerology to which a method described in the present disclosure is applicable.

Each element of the resource grid for the numerology $\mu$ and the antenna port p is called a resource element and is uniquely identified by an index pair $(k,\bar{l})$, where $k = 0,..., N_{\text{RB}}^{\mu} N_{\text{sc}}^{\text{RB}} - 1$ is an index on a frequency domain, and $\bar{l} = 0,...,2^{\mu} N_{\text{symb}}^{(\mu)} - 1$ refers to a location of a symbol in a subframe. The index pair $(k,l)$ is used to refer to a resource element in a slot, where $l = 0,...,N_{\text{symb}}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and $\mu$ may be dropped, and as a result, the complex value may be $a_{k,\bar{l}}^{(p)}$ or $a_{k,\bar{l}}$.

Further, a physical resource block is defined as $N_{\text{sc}}^{\text{RB}} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the LTE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{\text{CRB}}^{\mu}$ in the frequency domain and resource elements (k, l) for the subcarrier spacing configuration $\mu$ may be given by the following Equation 1.

[Equation 1]

$$n_{\text{CRB}}^{\mu} = \left\lfloor \frac{k}{N_{\text{sc}}^{\text{RB}}} \right\rfloor$$

Here, *k* may be defined relative to the point A so that *k* = 0 corresponds to a subcarrier centered around the point A. Physical resource blocks are defined within a bandwidth part (BWP) and are numbered from 0 to $N_{\text{BWP},i}^{\text{size}} - 1$, where *i* is No. Of the BWP. A relation between the physical resource block $n_{\text{PRB}}$ in BWP *i* and the common resource block $n_{\text{CRB}}$ may be given by the following Equation 2.

[Equation 2]

$$n_{\text{CRB}} = n_{\text{PRB}} + N_{\text{BWP},i}^{\text{start}}$$

Here, $N_{\text{BWP},i}^{\text{start}}$ may be the common resource block where the BWP starts relative to the common resource block 0.

## Bandwidth Part (BWP)

The NR system may support up to 400 MHz per component carrier (CC). If a UE which operates in wideband CC operates while continuously turning on RF for all CCs, LTE battery consumption may increase. Alternatively, when several use cases (e.g., eMBB, URLLC, mMTC, V2X etc.) which operate in one wideband CC are considered, different numerologies (e.g., sub-carrier spacing) may be supported for each frequency band in the corresponding CC. Alternatively, a capability for the maximum bandwidth may vary for each UE. By considering this, the BS may instruct the LTE to operate only in a partial bandwidth rather than the entire bandwidth of the wideband CC and intends to define the corresponding partial bandwidth as the bandwidth part (BWP) for convenience. The BWP may be constituted by consecutive resource blocks (RBs) on the frequency axis and may correspond to one numerology (e.g., sub-carrier spacing, CP length, slot/mini-slot duration).

Meanwhile, the eNB may configure multiple BWPs even in one CC configured to the UE. As one example, a BWP occupying a relatively small frequency domain may be configured in a PDCCH monitoring slot and a PDSCH indicated in PDCCH may be scheduled onto a BWP larger therethan. Alternatively, when UEs are concentrated on a specific BWP, some UEs may be configured to other BWPs for load balancing. Alternatively, a partial spectrum of the entire bandwidth may be excluded and both BWPs may be configured even in the same slot by considering frequency domain inter-cell interference cancellation between neighboring cells. In other words, the eNB may configure at least one DL/LTL BWP to the UE associated with the wideband CC and activate at least one DL/LTL BWP (by L1 signaling or MAC CE or RRC signaling) among configured DL/LTL BWP(s) at a specific time and switching may be indicated to another configured DL/UL BWP (by L1 signaling or MAC CE or RRC signaling) or when a timer value is expired based on a timer, the timer value may be switched to the DL/LTL BWP. In this case, the activated DL/LTL BWP is defined as an active DL/UL BWP. However, in a situation in which the LTE is in an initial access process or before RRC connection is set up, the UE may not receive a configuration for the DL/LTL BWP and in such a situation, the DL/LTL BWP assumed by the UE is defined as an initial active DL/UL BWP.

## Physical Channel and General Signal Transmission

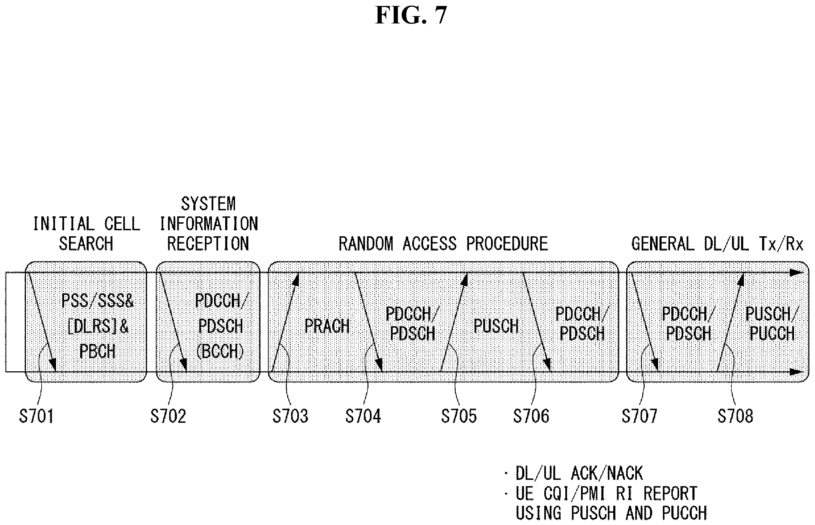

FIG. 7 illustrates physical channels and general signal transmission used in 3GPP systems. In a wireless communication system, the UE receives information from the eNB through Downlink (DL) and the LTE transmits information from the eNB through Uplink (LTL). The information which the eNB and the LTE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S701). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the LTE receives a Downlink Reference Signal (DL RS) in an initial cell search step to check a downlink channel status.

A LTE that completes the initial cell search receives a Physical Downlink Control Channel (PDCCH) and a Physical Downlink Control Channel (PDSCH) according to information loaded on the PDCCH to acquire more specific system information (S702).

Meanwhile, when there is no radio resource first accessing the eNB or for signal transmission, the LTE may perform a Random Access Procedure (RACH) to the eNB (S703 to S706). To this end, the LTE may transmit a specific sequence to a preamble through a Physical Random Access Channel (PRACH) (S703 and S705) and receive a response message (Random Access Response (RAR) message) for the preamble through the PDCCH and a corresponding PDSCH. In the case of a contention based RACH, a Contention Resolution Procedure may be additionally performed (S706).

The LTE that performs the above procedure may then perform PDCCH/PDSCH reception (S707) and Physical Uplink Shared Channel (PUSCH)/Physical Uplink Control Channel (PUCCH) transmission (S708) as a general uplink/downlink signal transmission procedure. In particular, the LTE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the LTE receives from the eNB may include a downlink/uplink ACK/NACK signal, a Channel Quality Indicator (CQI), a Precoding Matrix Index (PMI), a Rank Indicator (RI), and the like. The LTE may transmit the control information such as the CQI/PMI/RI, etc., through the PUSCH and/or PUCCH.

**Initial Access (IA) and Random Access (RA) Procedures**

Synchronization Signal Block (SSB) Transmission and Related Operation

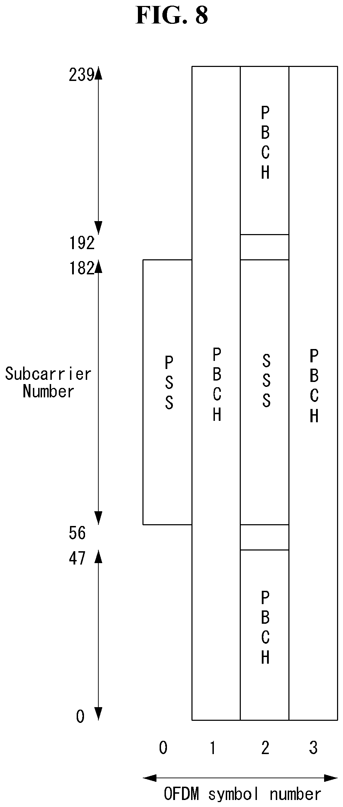

FIG. 8 illustrates an SSB structure. The UE may perform cell search, system information acquisition, beam alignment for initial access, DL measurement, and the like based on an SSB. The SSB is interchangeably used with a synchronization signal/physical broadcast channel (SS/PBCH) block.

Referring to FIG. 8, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers. The PBCH is encoded/decoded based on a polar code and is modulated/demodulated according to quadrature phase shift keying (QPSK). The PBCH in the OFDM symbol includes data resource elements (REs), to which a complex modulation value of the PBCH is mapped, and DMRS REs, to which a demodulation reference signal (DMRS) for the PBCH is mapped. There are three DMRS REs per resource block of the OFDM symbol, and there are three data REs between the DMRS REs.

Cell Search

The cell search refers to a procedure in which a UE acquires time/frequency synchronization of a cell and detects a cell identifier (ID) (e.g., physical layer cell ID (PCI)) of the cell. The PSS is used to detect a cell ID from a cell ID group, and the SSS is used to detect a cell ID group. The PBCH is used to detect an SSB (time) index and a half-frame.

The cell search procedure of the LTE may be summarized as shown in Table 5 below.

[Table 5]

|  | Type of Signals | Operations |
|---|---|---|
| 1 st step | PSS | * SS/PBCH block (SSB) symbol timing acquisition<br>* Cell ID detection within a cell ID group (3 hypothesis) |
| 2nd Step | SSS | * Cell ID group detection (336 hypothesis) |
| 3rd Step | PBCH DMRS | * SSB index and Half frame (HF) index (Slot and frame boundary detection) |
| 4th Step | PBCH | * Time information (80 ms, System Frame Number (SFN), SSB index, HF)<br>* Remaining Minimum System Information (RMSI) Control resource set (CORESET) /Search space configuration |

(continued)

| | Type of Signals | Operations |
|---|---|---|
| 5th Step | PDCCH and PDSCH | * Cell access information<br>* RACH configuration |

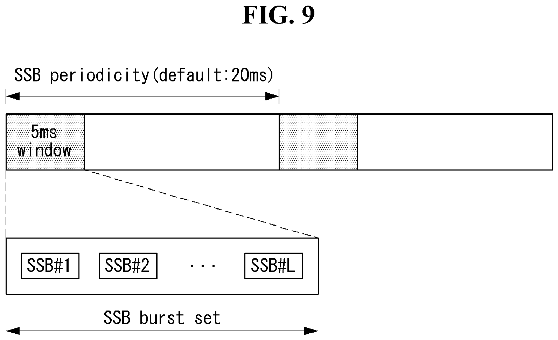

There are 336 cell ID groups, and there are 3 cell IDs per cell ID group. A total of 1008 cell IDs are present. Information on a cell ID group to which a cell ID of a cell belongs is provided/acquired via the SSS of the cell, and information on the cell ID among 336 cells in the cell ID is provided/acquired via the PSS. FIG. 9 illustrates SSB transmission.

The SSB is periodically transmitted in accordance with SSB periodicity. A default SSB periodicity assumed by a UE during initial cell search is defined as 20 ms. After cell access, the SSB periodicity may be set to one of {5 ms, 10 ms, 20 ms, 40 ms, 80 ms, 160 ms} by a network (e.g., a BS). An SSB burst set is configured at a beginning part of the SSB periodicity. The SSB burst set includes a 5 ms time window (i.e., half-frame), and the SSB may be transmitted up to N times within the SS burst set. The maximum transmission number L of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time position of an SSB candidate in the SS burst set may be defined based on a subscriber spacing. The time position of the SSB candidate is indexed from 0 to L-1 (SSB index) in time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE can identify a structure of the SSB burst set based on the detected SSB (time) index, and thus can detect a symbol/slot/half-frame boundary. The number of the frame/half-frame to which the detected SSB belongs may be identified using system frame number (SFN) information and half-frame indication information.

Specifically, the LTE may acquire a 10-bit SFN for a frame to which PBCH belongs from the PBCH. Next, the UE may acquire 1-bit half-frame indication information. For example, if the UE detects a PBCH with a half-frame indication bit set to 0, the UE may determine that the SSB, to which the PBCH belongs, belongs to a first half-frame in the frame, and if the UE detects a PBCH with a half-frame indication bit set to 1, the UE may determine that the SSB, to which the PBCH belongs, belongs to a second half-frame in the frame. Finally, the UE may acquire an SSB index of the SSB, to which the PBCH belongs, based on a DMRS sequence and a PBCH payload carried by the PBCH.

System Information Acquisition

System information (SI) is divided into a master information block (MIB) and a plurality of system information blocks (SIB). The SI other than the MIB may be referred to as remaining minimum system information (RMSI). The following may be referred to for details.

- The MIB includes information/parameters for monitoring PDCCH scheduling PDSCH carrying system information block1 (SIB1) and is transmitted by a BS via PBCH of SSB. For example, a UE may check whether a control resource set (CORESET) for a Type0-PDCCH common search space exists based on the MIB. The TypeO-PDCCH common search space is a kind of PDCCH search space and is used to transmit a PDCCH for scheduling an SI message. If there is a TypeO-PDCCH common search space, the LTE may determine, based on information (e.g., pdcch-ConfigSIB 1)) within the MIB, (i) a plurality of contiguous resource blocks and one or more consecutive symbols constituting the CORESET, and (ii) a PDCCH occasion (e.g., time domain location for PDCCH reception). If there is no TypeO-PDCCH common search space, pdcch-ConfigSIB 1 provides information for a frequency location where SSB/SIB1 exists and a frequency range where the SSB/SIB1 does not exist.
- The SIB1 contains information related to availability and scheduling (e.g., transmission periodicity, SI-window size) of the remaining SIBs (hereinafter, referred to as SIBx, where x is an integer of 2 or more). For example, the SIB1 may inform whether the SIBx is periodically broadcasted or whether the SIBx is provided by a request of the UE according to an on-demand scheme. If the SIBx is provided by the on-demand scheme, the SIB 1 may include information which the UE requires to perform an SI request. The SIB 1 is transmitted via the PDSCH, the PDCCH for scheduling the SIB1 is transmitted through the TypeO-PDCCH common search space, and the SIB1 is transmitted via the PDSCH indicated by the PDCCH.

- The SIBx is included in the SI message and is transmitted via the PDSCH. Each SI message is sent within a time window (i.e., SI-window) which periodically occurs.

## Channel Measurement and Rate-matching

Up to L SSBs may be transmitted within an SSB burst set, and the number/location of SSBs which are actually transmitted may vary per BS/cell. The number/location of SSBs which are actually transmitted is used for rate-matching and measurement, and information on the actually transmitted SSBs is provided to a UE.

## Random Access Procedure

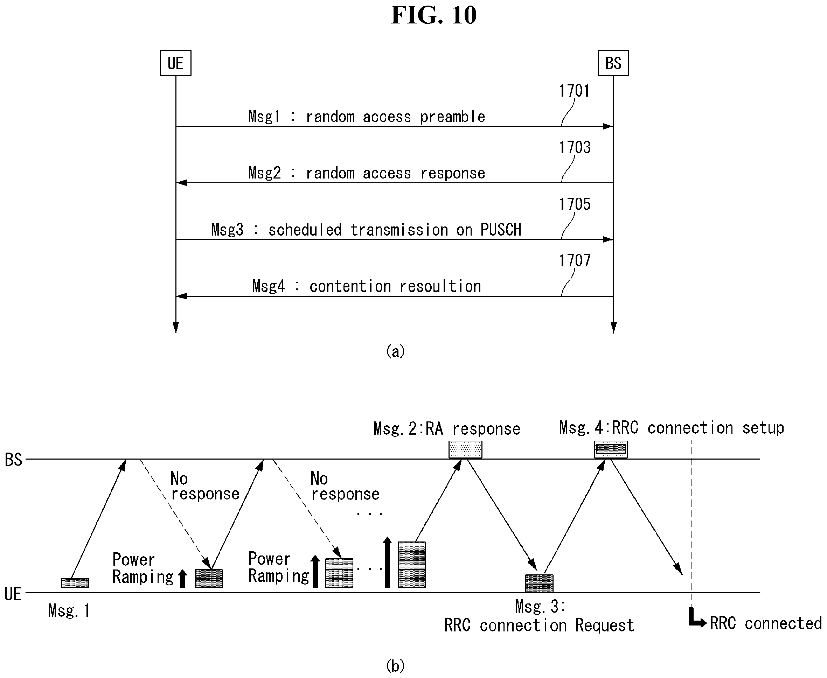

A random access procedure of a UE may be summarized as shown in Table 6 and FIG. 10.

[Table 6]

|  | Type of Signals | Operations/Information obtained |
|---|---|---|
| 1st step | PRACH preamble in UL | * Initial beam obtainment<br>* Random selection of RA-preamble ID |
| 2nd step | Random Access Response on DL-SCH | * Timing Advanced information<br>* RA-preamble ID<br>* Initial UL grant, Temporary C-RNTI |
| 3rd step | UL transmission on UL-SCH | * RRC connection request<br>* UE identifier |
| 4th step | Contention Resolution on DL | * Temporary C-RNTI on PDCCH for initial access<br>* C-RNTI on PDCCH for UE in RRC CONNECTED |

The random access procedure is used for various purposes. For example, the random access procedure may be used for network initial access, handover, and UE-triggered UL data transmission. The UE may acquire UL synchronization and UL transmission resources through the random access procedure. The random access procedure is classified into a contention-based random access procedure and a contention-free random access procedure.

FIG. 10 illustrates an example of a random access procedure. In particular, FIG. 10 illustrates a contention-based random access procedure.

First, a LTE may transmit a random access preamble on a PRACH as Msg1 of a random access procedure in LTL (e.g., see 1701 in (a) of FIG. 10).

Random access preamble sequences having different two lengths are supported. Long sequence length 839 is applied to subcarrier spacings of 1.25 kHz and 5 kHz, and short sequence length 139 is applied to subcarrier spacings of 15 kHz, 30 kHz, 60 kHz and 120 kHz.

Multiple preamble formats are defined by one or more RACH OFDM symbols and different cyclic prefixes (and/or guard time). RACH configuration for a cell is included in system information of the cell and is provided to the UE. The RACH configuration includes information on a subcarrier spacing of PRACH, available preambles, preamble format, and the like. The RACH configuration includes association information between SSBs and RACH (time-frequency) resources. The UE transmits a random access preamble in the RACH time-frequency resource associated with the detected or selected SSB.

A threshold of the SSB for the RACH resource association may be set by the network, and an RACH preamble is transmitted or retransmitted based on the SSB in which reference signal received power (RSRP) measured based on the SSB satisfies the threshold. For example, the LTE may select one of the SSB(s) satisfying the threshold and may transmit or retransmit the RACH preamble based on the RACH resource associated with the selected SSB.

When a BS receives the random access preamble from the UE, the BS transmits a random access response (RAR) message (Msg2) to the LTE (e.g., see 1703 in (a) of FIG. 10). A PDCCH that schedules a PDSCH carrying a RAR is CRC masked with a random access (RA) radio network temporary identifier (RNTI) (RA-RNTI) and is transmitted. The UE that detects the PDCCH masked with the RA-RNTI may receive a RAR from the PDSCH scheduled by DCI carried by the PDCCH. The LTE checks whether the RAR includes random access response information for the preamble transmitted by the LTE, i.e., Msg1. Presence or absence of random access information for the Msg1 transmitted by the UE may be determined based on presence or absence of a random access preamble ID for the preamble transmitted by the UE. If there is no response to the Msg1, the UE may retransmit the RACH preamble less than a predetermined number of times while performing power ramping, as illustrated in (b) of FIG. 10. The UE calculates PRACH transmission power for preamble retransmission based on most recent pathloss and a power ramping counter.

The random access response information includes timing advance information for LTL synchronization, an LTL grant, and LTE temporary cell RNTI (C-RNTI). If a temporary LTE receives random access response information for the UE itself on the PDSCH, the UE can know timing advance information for LTL synchronization, an initial LTL grant, and LTE temporary cell RNTI (C-RNTI). The timing advance information is used to control uplink signal transmission timing. In order to ensure that the PUSCH/PUCCH transmission by the UE is better aligned with subframe timing at a network end, the network (e.g. BS) may measure a time difference between the PUSCH/PUCCH/SRS reception and subframes and send timing advance information based on the time difference. The LTE may perform LTL transmission as Msg3 of the random access procedure on a physical uplink shared channel based on the random access response information (e.g., see 1705 in (a) of FIG. 10). The Msg3 may include an RRC connection request and a LTE identifier. The network may transmit Msg4 as a response to the Msg3, and the Msg4 may be handled as a contention resolution message on DL (e.g., see 1707 in (a) of FIG. 10). The UE may enter an RRC connected state by receiving the Msg4.

The contention-free random access procedure may be used or performed when the UE handovers to another cell or the BS or when the contention-free random access procedure is requested by a command of the BS. A basic process of the contention-free random access procedure is similar to the contention-based random access procedure. However, unlike the contention-based random access procedure in which the UE randomly selects a preamble to be used among a plurality of random access preambles, in the contention-free random access procedure, a preamble (hereinafter, referred to as a dedicated random access preamble) to be used by the UE is allocated by the BS to the UE. Information on the dedicated random access preamble may be included in an RRC message (e.g., a handover command) or may be provided to the UE via a PDCCH order. When the random access procedure is initiated, the UE transmits the dedicated random access preamble to the BS. When the LTE receives the random access procedure from the BS, the random access procedure is completed.

As mentioned above, the UL grant in the RAR schedules PUSCH transmission to the UE. The PUSCH carrying initial LTL transmission based on the LTL grant in the RAR is also referred to as Msg3 PUSCH. The content of the RAR UL grant starts at an MSB and ends at a LSB, and is given in Table 7.

[Table 7]

| RAR UL grant field | Number of bits |
|---|---|
| Frequency hopping flag | 1 |
| Msg3 PUSCH frequency resource at location | 12 |
| Msg3 PUSCH time resource al locat ion | 4 |
| Modulation and coding scheme (MCS) | 4 |
| Transmit power control (TPC) for Msg3 PUSCH | 3 |
| CSI request | 1 |

A TPC command is used to determine transmission power of the Msg3 PUSCH and is interpreted, for example, based on Table 8.

[Table 8]

| TPC command | value [dB] |
|---|---|
| 0 | -6 |
| 1 | -4 |
| 2 | -2 |
| 3 | 0 |
| 4 | 2 |
| 5 | 4 |
| 6 | 6 |

(continued)

| TPC command | value [dB] |
|---|---|
| 7 | 8 |

In the contention-free random access procedure, a CSI request field in the RAR UL grant indicates whether the LTE includes an aperiodic CSI report in the corresponding PUSCH transmission. A subcarrier spacing for the Msg3 PUSCH transmission is provided by an RRC parameter. The LTE will transmit the PRACH and Msg3 PUSCH on the same uplink carrier of the same service serving cell. A UL BWP for Msg3 PUSCH transmission is indicated by SIB1 (SystemInformationBlock1).

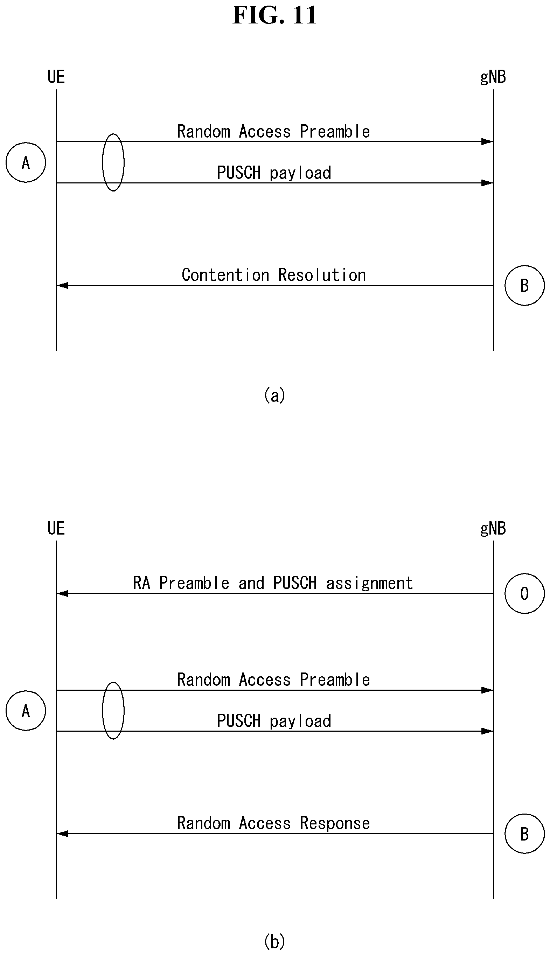

FIG. 11 illustrates a 2-step RACH procedure. More specifically, (a) of FIG. 11 illustrates a contention-based random access (CBRA), and (b) of FIG. 11 illustrates a contention-free random access (CFRA).

In FIG. 11, message A (MSGA) includes a preamble and a PUSCH payload. The preamble and the PUSCH payload are multiplexed in a time division multiplexing (TDM) scheme. Message B (MSGB) is a response to the message A (MSGA) and may be transmitted for contention resolution, fallback indication(s) and/or backoff indication.

**Technical terms used in the present disclosure**

UE: User Equipment
SSB: Synchronization Signal Block
MIB: Master Information Block
RMSI: Remaining Minimum System Information
FR1: Frequency domain with frequency range less than or equal to 1.6 GHz (e.g., 450 MHz to 6,000 MHz).
FR2: Millimeter wave (mmWave) domain with frequency range greater than or equal to 2.24 GHz (e.g., 24,250 MHz to 52,600 MHz).
BW: Bandwidth
BWP: Bandwidth Part
RNTI: Radio Network Temporary Identifier
CRC: Cyclic Redundancy Check
SIB: System Information Block
SIB1: SIB1 for NR devices = RMSI (Remaining Minimum System Information). It broadcasts information, etc. necessary for cell access of an NR UE.
CORESET (Control Resource SET): time/frequency resource in which an NR UE tries candidate PDCCH decoding.
CORESET#0: CORESET for TypeO-PDCCH CSS set for NR devices (configured at MIB)
TypeO-PDCCH CSS set: a search space set in which an NR LTE monitors a set of PDCCH candidates for a DCI format with CRC scrambled by a SI-RNTI
MO: PDCCH Monitoring Occasion for TypeO-PDCCH CSS set
SIB1-R: (additional) SIB1 for reduced capability NR devices. It may be limited when it is generated with a separate TB from SIB1 and is transmitted on a separate PDSCH.
CORESET#0-R: CORESET#0 for reduced capability NR devices
Type0-PDCCH-R CSS set: a search space set in which a RedCap LTE monitors a set of PDCCH candidates for a DCI format with CRC scrambled by a SI-RNTI
MO-R: PDCCH Monitoring Occasion for TypeO-PDCCH CSS set
Cell defining SSB (CD-SSB): SSB including RMSI scheduling information among NR SSBs
Non-cell defining SSB (non-CD-SSB): SSB that has been deployed on NR sync raster, but does not include RMSI scheduling information of a corresponding cell for measurement. But, the SSB may include information informing a location of cell defining SSB.
SCS: Subcarrier Spacing
SI-RNTI: System Information-Radio Network Temporary Identifier
Camp on: "Camp on" is a LTE state in which the LTE stays on a cell and is ready to initiate a potential dedicated service or to receive an ongoing broadcast service.
TB: Transport Block
RSA (Redcap standalone): Redcap device or cell supporting only service.
SIB1(-R)-PDSCH: PDSCH transmitting SIB1(-R)
SIB1(-R)-DCI: DCI scheduling SIB1(-R)-PDSCH. DCI format 1_0 with cyclic redundancy check (CRC) scrambled by SI-RNTI.

SIB1(-R)-PDCCH: PDCCH transmitting SIB1(-R)-DCI

FDRA: Frequency Domain Resource Allocation

TDRA: Time Domain Resource Allocation

RA: Random Access

MSGA: Preamble and payload transmissions of a random access procedure for 2-step RA type.

MSGB: Response to MSGA in the 2-step random access procedure. The MSGB consists of response(s) for contention resolution, fallback indication(s), and backoff indication.

RO-N: RACH Occasion (RO) for normal UE 4-step RACH and 2-step RACH (if configured).

RO-N1, RO-N2: If a separate RO is configured for normal UE 2-step RACH, it is divided into RO-N1 (4-step) and RO-N2 (2-step).

RO-R: RACH Occasion (RO) that is configured separately from RO-N for RedCap UE 4-step RACH and 2-step RACH (if configured).

RO-R1, RO-R2: If a separate RO is configured for RedCap UE 2-step RACH, it is divided into RO-R1 (4-step) and RO-R2 (2-step).

PG-R: MsgA-Preambles Group for RedCap UEs

RAR: Random Access Response

RAR window: the time window to monitor RA response(s)

FH: Frequency Hopping

In addition to 5G main use cases (mMTC, eMBB and URLLC), the importance/interest in the use case domain over mMTC and eMBB or mMTC and URLLC has recently increased. Hence, the need for UEs for efficiently supporting these use cases in terms of device cost, power consumption, form factor, etc. has increased.

In the present disclosure, a UE for the above purpose is called a (NR) reduced capability UE/device, or a (NR) RedCap UE/device for short. Further, distinguished from the RedCap device, a general NR UE that supports all or one or more of the 5G main use cases is called an NR (normal) UE/device or a non-redcap UE/device. The RedCap UE may be a UE that intentionally reduces some capabilities of 5G key capabilities (peak data rate, user experienced data rate, latency, mobility, connection density, energy efficiency, spectrum efficiency, and area traffic efficiency) defined in IMT-2020, in order to achieve all or part of low device cost/complexity, low power consumption, small form factor, etc.

The 5G use case domain over mMTC and eMBB or mMTC and URLLC that are target use cases of the RedCap device is called RedCap use cases for convenience of explanation in the present disclosure.

For example, the redcap use cases may be as follows.

**[RedCap use cases]**

**Connected industries**

- Sensors and actuators are connected to 5G networks and core
- Include massive Industrial Wireless Sensor Network (IWSN) use cases and requirements
- Not only URLLC services with very high requirements, but also relatively low-end services with the requirement of small device form factors with a battery life of several years
- Requirements for these services are higher than Low Power Wide Area (LPWA) (i.e., LTE-M/NB-IOT) but lower than URLCC and eMBB.
- Devices in such environment include e.g. pressure sensors, humidity sensors, thermometers, motion sensors, accelerometers, actuators, etc.

**Smart city**

- The smart city vertical covers data collection and processing to more efficiently monitor and control city resources, and to provide services to city residents.
- Especially, the deployment of surveillance cameras is an essential part of the smart city but also of factories and industries.

**Wearables**

- Wearables use case includes smart watches, rings, eHealth related devices, and medical monitoring devices etc.
- One characteristic for the use case is that the device is small in size.

The RedCap use cases cannot be supported by low power wireless area (LPWA) UEs (e.g., LTE-M, NB-IoT, etc.) in terms of bit rate, latency, etc. The NR LTE can functionally support the RedCap use cases, but the support may be ineffective in terms of the UE manufacturing cost, form factor, battery life, etc.

The fact that a RedCap UE having characteristics such as low cost, low power, small form factor, etc. supports the use case area in the 5G network can bring an effect of reducing the manufacturing cost and maintenance cost of the UEs.

The RedCap use cases have quite diverse requirements in terms of UE complexity, target bit rate, latency, power consumption, etc. The RedCap requirements may be divided into generic requirements applied to all the RedCap use cases and use case specific requirements applied only to specific use case(s).

For example, some typical generic and use case specific requirements may be as follows.

**[Redcap requirements]**

**Generic requirements**

- Device complexity/cost: Main motivation for the new device type is to lower the device cost and complexity as compared to high-end eMBB and URLLC devices of Rel-15/Rel-16. This is especially the case for industrial sensors.
- Device size: Requirement for most use cases is that the standard enables a device design with compact form factor
- Deployment scenarios: System should support all FR1/FR2 bands for FDD and TDD

**Use case specific requirements**

**Industrial wireless sensors**

reference bit rate: < 2 Mbps (potentially UL heavy traffic)
end-to-end latency: < 100 ms; ~ 5-10 ms for safety related sensors
battery: at least few years
- communication service availability: 99.99%
- stationary

**Video Surveillance**

- Reference bit rate: < 2-4 Mbps for economic video; ~7.5-25 Mbps for high-end video (UL heavy traffic)

- Latency: < 500 ms

- Reliability: 99%-99.9%.

**Wearables**

- Reference bit rate: 10-50 Mbps in DL and >= 5 Mbps in UL for smart wearable application

- Peak bit rate: 150 Mbps in DL and 50 Mbps in UL

- Battery: multiple days (up to 1-2 weeks)

An example of schematic use case specific requirements for the three typical RedCap use cases is the same as Table 9.

[Table 9]

| Use cases | Complexity | Form factor | Bit rate (Mbps) | Latency (ms) | Mobility | Battery |
|---|---|---|---|---|---|---|
| Industrial Wireless Sensor | Very low | Very small | A few | Tens of / A few [1] | Stationary | Years |
| Video Surveillance | Low [2] | Small | A few / Tens of | Hundreds of | Stationary | |
| Wearables | Low [2] | Small | Tens of | | Mobile | Weeks |
| 1) safety related sensors<br>] 2) Low complexity compared to the normal NR device | | | | | | |

The RedCap requirements can be satisfied by (combination of) various features provided by the UE and the BS. The followings are examples of features and sub-features supported by the UE/BS for satisfying the RedCap requirements.

**[Redcap UE features]**

**Complexity reduction features**

- Reduced number of UE RX/TX antennas
- LTE Bandwidth reduction
- Half-Duplex-FDD
- Relaxed UE processing time
- Relaxed UE processing capability

**Power saving**

- Reduced PDCCH monitoring by smaller numbers of BDs and CCE limits
- Extended DRX for RRC Inactive and/or Idle
- RRM relaxation for stationary devices
- Coverage recovery/enhancement

The RedCap use cases may define and support one or multiple UEs. The present disclosure considers all the following two cases (Case A/Case B).

Case A: Support the RedCap use cases in a single device type case
Case B: Support the RedCap use cases in multiple device type case

In the Case A, a RedCap UE may be a UE satisfying all the RedCap requirements (i.e., the generic requirements and the use case specific requirements), and/or may be a UE supporting all the RedCap use cases. In this case, because the LTE shall simultaneously satisfy various requirements, there may be a factor increasing the cost due to an increase in the UE complexity, but at the same time, a cost reduction effect can be expected from mass production based on the expansion of use cases.

In the Case B, considering that the RedCap use case requirements are considerably diverse, a device type may be defined and supported for each RedCap use case. Even in this case, all the generic requirements may be commonly satisfied. In this instance, respective device types defined for each use case are referred to as RedCap device types. The Case B includes a case where several use cases that are similar in terms of requirements are grouped and supported in a single device type. These RedCap device types may be to support some or a specific combination previously defined among RedCap UE features. As above, when multiple RedCap device types are defined and suppot RedCap use cases, there is an advantage that specific RedCap use case(s) can be supported through a RedCap UE that is more optimized in terms of cost, power consumption, etc. For example, an IWS use case may be supported through a dedicated UE that is very small, inexpensive, and power efficient.

The RedCap use cases and the generic requirements or the use case specific requirements mentioned in the present disclosure are not necessarily supported or satisfied, and it may be determined whether to support or satisfy them in a trade-off type considering factors such as cost/complexity, power consumption, and form factor of the RedCap device or the device type.

In the present disclosure, reduced capability may include the meaning of reduced/low complexity/low cost/reduced bandwidth, and the like.

### Redcap device type classification and method of reporting to BS

For the case where RedCap use cases are supported by multiple device types (i.e., Case B), the following methods may be considered to classify the RedCap device types. The following methods can be applied even to the Case A in order to distinguish the RedCap device from the NR UE.

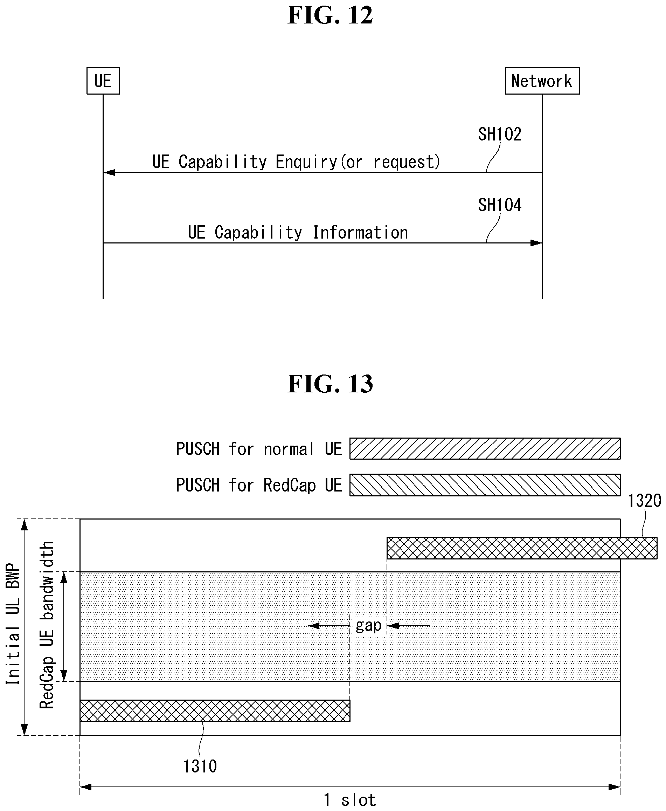

In order to support an operation of the RedCap device distinguished from the NR UE, the RedCap device may have to report device type information of the RedCap device to the base station. FIG. 12 illustrates a flow chart of a procedure of reporting device type information to a base station. The reporting procedure may reuse a UE capability transfer procedure defined in a predefined standard (e.g., 3GPP TS 38.331), as follows. The base station may acquire RedCap device type information through LTE capability information reception and may use LTE information acquired upon the scheduling of the corresponding UE.

For example, the base station/network may request UE capability from the UE in RRC_CONNECTED state (SH102). And/or, the UE may transmit the RedCap device type information to LTE capability information (SH104).

### [Classification Method 11

Redcap device types may be classified based on one of main requirements. Examples of the main requirements that can be the basis of classification may include supported max data rate (peak bit rate), latency, mobility (stationary/fixed, portable, mobile, etc.), battery lifetime, complexity, coverage, and the like. (Combination of) LTE feature(s) that shall be mandatorily supported or can be selectively supported for each classified RedCap device type may be defined in a predefined standard (e.g., 3GPP Specification). This may be to reduce overhead separately signaling whether to support features for each device type. In the present disclosure, 'defined in a predefined standard' may mean that it is predefined/preconfigured/pre-promised between the LTE and the base station.

Redcap device type information that is included in LTE capability information and is reported by the LTE to the base station/network may be, for example, a specific field of LTE-NR-Capability information element (IE) (e.g., RedCap-DeviceType). For example, when the RedCap device types are classified into RedCap device type 1, 2, ..., a value of RedCapDeviceType field may be expressed by an integer value such as 1, 2, ..., or a combination of character and integer such as r1, r2, .... As above, the LTE has an advantage of signaling overhead by including the device type and parameters related to it in capability information as one field and reporting it.

For example, the RedCap device types may be classified based on a supported max data rate, and the LTE may report the RedCap device type to the base station based on this classification.

The supported max data rate of the NR UE may be defined/determined as the following Equation in a predefined standard (e.g., 3GPP TS 38.306).

### Supported max data rate

### General

The DL and LTL max data rate supported by the LTE may be calculated by band or band combinations supported by the UE. A UE supporting NR (e.g., NR SA, MR-DC) shall support the calculated DL and LTL max data rate defined in the following.

### Supported max data rate

For NR, the approximate data rate for a given number of aggregated carriers in a band or band combination may be computed by the following Equation 3.

【Equation 3】

$$\text{data rate (in Mbps)} = 10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot \left(1 - OH^{(j)}\right) \right)$$

Wherein J is the number of aggregated component carriers in a band or band combination.

$$R_{max} = 948/1024$$

For the j-th CC, $v_{Layers}^{(j)}$ is the maximum number of supported layers given by higher layer parameter maxNumberMIMO-LayersPDSCH for downlink or higher layer parameters maxNumberMIMO-LayersCB-PUSCH and maxNumberMIMO-LayersNonCB-PUSCH for uplink.

$Q_m^{(j)}$ is the maximum supported modulation order given by higher layer parameter supportedModulationOrderDL for downlink and higher layer parameter supportedModulationOrderLTL for uplink.

$f^{(j)}$ is the scaling factor given by higher layer parameter scalingFactor and can take the values 1, 0.8, 0.75, and 0.4.

$\mu$ is the numerology.

$T_s^{\mu}$ is the average OFDM symbol duration in a subframe for numerology $\mu$, i.e., $T_s^{\mu} = \frac{10^{-3}}{14 \cdot 2^{\mu}}$. Normal cyclic prefix is assumed.

$N_{PRB}^{BW(j),\mu}$ is the maximum RB allocation in bandwidth $BW^{(j)}$ with numerology $\mu$, where $BW^{(j)}$ is the LTE supported maximum bandwidth in the given band or band combination.

$OH^{(j)}$ is the overhead and takes the following values.

0.14, for frequency range FR1 for DL
0.18, for frequency range FR2 for DL
0.08, for frequency range FR1 for LTL
0. 10, for frequency range FR2 for LTL

Only one of the UL or SUL carriers is counted for a cell operating SUL.

The approximate maximum data rate can be computed as the maximum of the approximate data rates computed using the above Equation for each of the supported band or band combinations.

For single carrier NR SA operation, the UE shall support a data rate for the carrier that is no smaller than the data rate computed using the above Equation, with J = 1 CC and component $v_{Layers}^{(j)} \cdot Q_m^{(j)} \cdot f^{(j)}$ is no smaller than 4.

For example, the value 4 in the component above can correspond to $v_{Layers}^{(j)} = 1$, $Q_m^{(j)} = 4$ and $f^{(j)} = 1$.

For EUTRA in case of MR-DC, the approximate data rate for a given number of aggregated carriers in a band or band combination can be computed by the following Equation 4.

【Equation 4】

$$\text{Data rate (in Mbps)} = 10^{-3} \cdot \sum_{j=1}^{J} TBS_j$$

Wherein J is the number of aggregated EUTRA component carriers in MR-DC band combination.

$TBS_j$ is the total maximum number of DL-SCH transport block bits received or the total maximum number of LTL-SCH transport block bits transmitted, within a 1ms TTI for j-th CC, as derived from a predefined standard (e.g., 3GPP TS36.213) based on the UE supported maximum MIMO layers for the j-th CC, and based on the maximum modulation order for the j-th CC and number of PRBs based on the bandwidth of the j-th CC according to indicated UE capabilities.

The approximate maximum data rate can be computed as the maximum of the approximate data rates computed using Equation 4 above for each of the supported band or band combinations.

For MR-DC, the approximate maximum data rate can be computed as the sum of the approximate maximum data rates from NR and EUTRA.

In this case, parameters required for the formula computing the supported max data rate that the NR UE shall support may be reported by the UE by a request of the base station in RRC _CONNECTED state. The parameters are as follows. The higher elements mean higher RRC information elements (IE) to which the parameters belong.

FeatureSetDownlink

- scalingFactor

FeatureSetDownlinkPerCC

- maxNumberMIMO-LayersPDSCH
- supportedModulationOrderDL
- supportedBandwidthDL
- supportedSubCarrierSpacingDL

FeatureSetUplink

- scalingFactor

FeatureSetUplinkPerCC

- maxNumberMIMO-LayersCB-PUSCH
- maxNumberMIMO-LayersNonCB-PUSCH
- supportedModulationOrderUL
- supportedBandwidthUL
- supportedSubCarrierSpacingUL

For the RedCap UE, in a method of classifying the RedCap device types based on the supported max data rate, values of the parameters for each device type are defined in a predefined standard (e.g., 3GPP Specification), and the UE may indicate the RedCap device type information and information on the parameters to the base station by setting a value of RedCapDeviceType field of UE-NR-Capability IE to a specific value. Compared to the related operation that the NR LTE includes the parameters in LTE capability information and transmits it to the base station, the RedCap UE can expect an effect of signaling overhead reduction by reporting the device type and the parameters related to it through one field. The base station can acquire the device type, the supported max data rate, and the values of the parameters mentioned above through value of RedCapDeviceType field and use them in UE scheduling, etc.

**[Classification Method 2]**

Alternatively, RedCap device types may be classified based on (combination of) UR feature(s) that shall be mandatorily supported or can be selectively supported, not based on main requirements. This may be a more appropriate method when features that shall be supported or can be supported for each use case are clear.

(Combination of) UR feature(s) that is predefined for each RedCap device type in a predefined standard (e.g., 3GPP Specification) may be referred to as a feature set. A feature set that shall be mandatorily supported for each device type among (combination of) the UR feature(s) may be referred to as a mandatory feature set of the corresponding device type or specifying the device type.

In this method, definition of the RedCap device type may not be specified in the predefined standard (e.g., 3GPP Specification), and this may mean that the RedCap use cases are supported in separate device types supporting different feature sets.

In the above method, a RedCap UE may report a RedCap device type or use case(s) supported by the RedCap UE to a base station by reporting a predefined feature set to the base station. This can be seen as a method that more closely conforms to the basic philosophy of NR to support various use cases through various optional features without distinguishing a separate UE category. The feature set may be replaced by a combination of capability parameters (i.e., capability parameter set). The feature set may be a mandatory feature set defined in the predefined standard (e.g.,

3GPP Specification) per RedCap device type.

For the above operation, a set of candidate features (i.e., feature pool) for RedCap device (type) may be defined or configured in the predefined standard (e.g., 3GPP Specification), and the RedCap device may report a mandatory feature set defined for each type based on a type of the RedCap device to the base station. The LTE may additionally report an optional feature set in addition to the mandatory feature set to the base station. The UE may perform an additional operation or a more optimized operation for a specific use case by additionally selecting and reporting the optional feature set. For example, for a device type for a surveillance camera use case, when a wired power supply UE and a battery power supply UE coexist, the mandatory feature set does not include a power saving feature and may designate or include the optional feature. Hence, the UE may report the feature to the base station when selectively supporting the feature based on the detailed device type.

The base station may grasp whether to support the feature based on whether the corresponding parameter is present in the feature set reported by the RedCap UE, and reflect it upon the scheduling of the corresponding UE.

**[Classification Method 3]**

Alternatively, RedCap device types may be classified based on a combination of capability parameter(s). The combination of capability parameters classifying the RedCap device types may parameters determining the RedCap requirements. Examples of the capability parameters determining the RedCap device type may include UE supported bandwidth, modulation order, and number of MIMO layers determining a supported max data rate requirement supported by the UE. Values of the parameters may be a list of actually supportable values, or a maximum value among supported values.

For example, capability parameter(s) determining the RedCap device type may be as follows.

- Supported Bandwidth (NRB): (max) LTE channel bandwidth or (max) LTE transmission bandwidth; in units of RB
- Supported modulation order (Qm): Qm=2 for QPSK; 4 for 16 QAM; 6 for 64 QAM; etc.
- Supported number of MIMO layers (NL): replaceable with number of antennas (Na)

A combination of capability parameters determining the RedCap device type may be referred to as a capability parameter set of the corresponding device type. For example, the RedCap device type may be defined by classifying capability parameter set value(s) in ascending order (or descending order) of the supported max data rate. The following example is an example of defining M device types in ascending order of the supported max data rate.

Classification (example) of Redcap device types based on capability parameter set value(s):

- Device Type 1: {NL, NRB, Qm}={1, 25, 2}
- Device Type 2: {NL, NRB, Qm}={1, 25, 4}, or {1, 52, 2}
- Device Type 3: {NL, NRB, Qm}={1, 52, 4}, or {1, 106, 2}
- Device Type 4: {NL, NRB, Qm}={1, 106, 4}, or {2, 106, 2}
- Device Type 5: {NL, NRB, Qm}={1, 106, 6}
- Device Type 6: {NL, NRB, Qm}={2, 106, 4}
- Device Type 7: {NL, NRB, Qm}={2, 106, 6}
- ...
- Device Type M: {NL, NRB, Qm}={X, Y, Z}

For example, for NR frequency range 1 (FR1) (i.e., band of 6 GHz or less), NRB value may use one value among values defined in Table 10 (the number of configurable maximum RBs per UE channel bandwidth). The above example is value based on subcarrier spacing (SCS) = 15 kHz. If the RedCap device supports SCS=30 kHz, and a cell that the RedCap device wants to access uses SCS=30 kHz for data transmission, the NRB value based on SCS=15 kHz in the above example may be replaced by a value corresponding to SCS=30 kHz with reference to Table 10.

Table 10 represents max transmission bandwidth configuration $N_{RB}$ per subcarrier spacing (SCS) at NR FR1.

[Table 10]

| SCS (kHz) | 5 MHz | 10 MHz | 15 MHz | 20 MHz |
|---|---|---|---|---|
| | $N_{RB}$ | $N_{RB}$ | $N_{RB}$ | $N_{RB}$ |
| 15 | 25 | 52 | 79 | 106 |
| 30 | 11 | 24 | 38 | 51 |

In the device type classification example, the device Type 2/3/4 is a case of defining one device type using multiple capability set values. As above, when the device types are classified based on the supported max data rate, multiple capability parameter set values defining one device type may mean combinations supporting the same or similar supported max data rate.

Supportable device type(s) for each use case using the device type(s) defined in the above example may be defined as follows. Based on the supportable device type(s), the base station may restrict the cell access, or perform subscription based barring.

Supportable device type(s) (example) for each use case

- IWS: Device types 1, 2
- Video Surveillance: Device types 2, 3
- Wearables: Device type: Device types 4, 5, 6, 7

In order to avoid an increase in cost due to market segmentation according to an excessive division of the device type, the number M of device types may be limited. For example, when M=1, the RedCap UE is not classified into the multiple device types, and can support all the target use cases in a single device type.

As another example, when M=3, device type classification and supportable device type(s) for each use case may be defined as follows.

Device type classification based on capability set value(s) (e.g., when M=3):

- Device Type 1: {NL, NRB, Qm}={1, 25, 2} (or {1, 25, 4} or {1, 52, 2})
- Device Type 2: {NL, NRB, Qm}={1, 52, 4} or {1, 106, 2}
- Device Type 3: {NL, NRB, Qm}={2, 106, 6}

Supportable device type(s) for each use case (e.g., when M=3)

- IWS: Device types 1
- Video Surveillance: Device types 3
- Wearables: Device type: Device types 7

A UE max bandwidth (i.e., bandwidth capability of the RedCap UE) may be determined as a minimum bandwidth satisfying a bit rate required in a target use case. A UE max bandwidth reduction can reduce RF element and/or baseband processing cost and expect an effect of reducing power consumption. Herein, the required bit rate may mean a peak rate or the supported max data rate considering that the device manufacturing cost is determined by the peak rate or the supported max data rate not an average bit rate and a reference bit rate.

When determining the max bandwidth supporting the required bit rate, a specific value may be assumed for other parameters (e.g., number of antennas (NL), modulation order (Qm), etc.) determining the required bit rate. For example, in the above example, for Device Type 3, a peak rate of about ~28 MHz may be supported. In this instance, the required max bandwidth may be 20 MHz (106 RBs) when {NL=1, Qm=2} is assumed, and 10 MHz (52 RBs) when {NL=1, Qm=4} is assumed. Or, the required max bandwidth may be 5 MHz (25 RBs) when {NL=2, Qm=4} is assumed.

- Device Type 3: {NL, NRB, Qm}={1, 52, 4}, or {1, 106, 2}

Within the max UE bandwidth of the RedCap UE, a transmission bandwidth may be assigned and transmitted/received by network configuration using RRC signaling, etc.

A UE min bandwidth may be defined as a minimum value among NR UE channel bandwidths (or transmission bandwidths) greater than or equal or an NR SSB bandwidth.

For example, at FR1, the LTE min bandwidth may be 5 MHz for NR SSB with SCS=15 kHz, and may be 10MHz for NR SSB with SCS=30 kHz.

As another example, at FR2, the LTE min bandwidth may be 40MHz for NR SSB with SCS=120 kHz, and may be 80MHz for NR SSB with SCS=240 kHz.

This may be to implement low power consumption and at the same time support an access on an NR cell via NR SSB by supporting a service, in which the required bit rate is small, at a minimum bandwidth.

**[Classification Method 4]**

Considering that a bandwidth capability of a RedCap UE is determined by a required bit rate of respective use cases, a RedCap device type may be classified based on a LTE bandwidth capability. For example, a bandwidth capability determining the RedCap device type may be to represent a (max) LTE channel bandwidth or a (max) LTE transmission bandwidth (i.e., supported bandwidth (NRB)) in units of RB. Alternatively, the bandwidth capability may be a minimum LTE channel bandwidth or a minimum LTE transmission bandwidth. More specifically, the following classification is possible.

- Classification method 4-1) The RedCap device type is classified by a max bandwidth and is used by being configured with an actual data transmission/reception bandwidth (<= max bandwidth)
- Classification method 4-2) The RedCap device type is classified by a min bandwidth and is used by being configured with an actual data transmission/reception bandwidth (>= min bandwidth)
- Classification method 4-3) One or multiple supportable bandwidths (set) are defined for each device type, and is used by being configured with an actual data transmission/reception bandwidth within the corresponding bandwidth (set)

For the classification methods 4-1/2/3, the max bandwidth may be limited to a value (e.g., 20 MHz) less than an NR bandwidth, and the min bandwidth may be greater than or equal to an SSB bandwidth (e.g., 5MHz for 15kHz SSB).

**Initial access of RedCap UE and Method of supporting frequency retuning**

In a new radio (NR) cell supporting a reduced capability (RedCap) user equipment (UE), it may be preferred from a resource efficiency perspective that a normal UE and the RedCap LTE share as many resources as possible. That is, in a cell in which the normal LTE and the RedCap UE coexist or can coexist, it may be preferred from the resource efficiency perspective that the normal UE and the RedCap UE share as many resources as possible. If available/schedulable resources for the normal UE and available/schedulable resources for the RedCap UE are completely separated from each other, there may be problems in that resource utilization may decrease and scheduling flexibility may be restricted from a BS perspective.

However, in the following cases, sharing resources between the normal UE and the RedCap UE in a random access (RA) procedure for cell access may not be effectively supported by the related art method.

(1) If (additional) repetition, etc. are required for the RedCap UE due to a difference in a coverage performance between the NR UE and the RedCap LTE in Msg2 (or RAR), Msg4, or MsgB step,
(2) If an initial uplink (UL) bandwidth part (BWP) cannot be configured within a max UE bandwidth of the RedCap UE considering an impact for a legacy NR UE,
(3) If an impact for the NR LTE in the random access procedure is unavoidable due to UE processing time relaxation, etc. of the RedCap UE,

For example, a repetition in a random access channel (RACH) procedure of the RedCap UE may be equally applied to at least one among Msgs 1-4/Msgs A-B or individually applied in independent configuration of each message.

Hereinafter, the present disclosure proposes initial access and frequency retuning of the RedCap UE, and a method of supporting contention resolution in the NR cell in which the normal UE and the RedCap UE coexist.

Specifically, the present disclosure proposes a method of transmitting Msg3 PUSCH and/or Msg4 ACK/NACK PUCCH through frequency retuning of a RedCap UE (hereinafter, first embodiment), a method of contention resolution after a base station receives Msg3 (hereinafter, second embodiment), and a method of granting/distinguishing separate C-RNTI for a RedCap UE (hereinafter, third embodiment).

Embodiments described below in the present disclosure are merely distinguished for convenience of explanation. Thus, it is obvious that partial method and/or partial configuration of any embodiment can be substituted or combined with partial method and/or partial configuration of another embodiment.

A slot, a subframe, a frame, etc. described in embodiments of the present disclosure may be examples of predetermined time units used in a wireless communication system. That is, when applying methods described in the present disclosure, time unit can be replaced by other time units applied to other wireless communication systems.

The contents described above (3GPP system, frame structure, NR system, etc.) can be combined with methods proposed in the present disclosure to be described below, and/or supplemented to clarify technical features of the methods proposed in the present disclosure.

In the present disclosure, '()' can be interpreted as both when excluding content in () and when including content in parentheses. And/or, in the present disclosure, '()' may mean a group of elements (or contents) in parentheses, or may mean the abbreviation/full name of the term before parentheses, and/or may mean writing contents before parentheses in English.

In the present disclosure, '/' can be interpreted as both when including all the contents separated by '/' (and) and when including only a part of the separated contents (or).

## First Embodiment

This embodiment describes a method of transmitting Msg3 PUSCH and/or Msg4 ACK/NACK PUCCH through frequency retuning of a RedCap UE.

When an initial UL bandwidth is greater than a RedCap UE bandwidth, the RedCap UE may transmit a physical uplink shared channel (PUSCH) and/or a physical uplink control channel (PUCCH) through frequency retuning. For example, in the present disclosure, Msg3 PUSCH may be referred to as Msg3 or PUSCH. And/or, Msg4 ACK/NACK PUCCH may be referred to as Msg4 PUCCH, ACK/NACK PUCCH, or PUCCH.

In this case, retuning time between hops may be required upon PUSCH or PUCCH frequency hopping (FH).

Methods described below are merely distinguished for convenience of explanation. Thus, it is obvious that configuration of any method can be substituted or combined with configuration of another method.

## (Method 1-1)

This method is a method of inserting a gap between PUSCH/PUCCH frequency hops.

The gap may refer to a gap for temporally spacing hops in order to give time for frequency retuning between frequency hops. And/or, a gap applied to PUSCH/PUCCH may be defined in units of symbol (e.g., 1-symbol gap, 2-symbol gap, etc.), or defined in absolute time unit (e.g., us unit). And/or, a gap for retuning may be a fixed value in predefined specification (e.g., 3GPP Specification), or a value that a base station configures via higher layer through system information, etc., and/or a value configured through a random access response (RAR) (or LTL grant).

And/or, a gap between frequency hops of the Msg3 PUSCH may be configured in RAR (or LTL grant).

And/or, for the PUCCH, the gap may be indicated as in RAR (or UL grant), or may be indicated via Msg4 scheduling downlink control information (DCI). If 1-symbol gap is configured, 1-bit field may be added to RAR (or LTL grant) or Msg4 scheduling DCI for 1-symbol gap on/off.

FIG. 13 illustrates an example of a method of inserting a gap between PUSCH/PUCCH frequency hops.

Referring to FIG. 13, a RedCap UE bandwidth may be less than an initial UL BWP. In this case, in order to transmit PUSCH/PUCCH using frequency hopping, a gap may be inserted between a first frequency hop 1310 and a second frequency hop 1320.

For example, a RedCap UE may transmit PUSCH (or PUCCH) in the first frequency hop 1310. And/or, the RedCap LTE may perform frequency retuning so that the second frequency hop 1320 is included in the RedCap UE bandwidth. And/or, the RedCap UE may transmit the PUSCH (or PUCCH) in the second frequency hop 1320 within the retuned RedCap UE bandwidth. In this instance, considering necessary time for frequency retuning, a gap may be inserted or present between the second frequency hop 1320 and the first frequency hop 1310.

And/or, the RedCap UE may be configured by a base station (BS) so that the first frequency hop is included in an initial RedCap UE bandwidth, and may transmit the PUSCH (or PUCCH) in the first frequency hop without frequency retuning. Or, if the first frequency hop is not included in the initial RedCap LTE bandwidth, the RedCap LTE may perform frequency retuning by BS configuration or a predefined method and transmit the PUSCH (or PUCCH) in the first frequency hop within the retuned RedCap UE bandwidth. In the present disclosure, performing the frequency retuning may mean tuning a frequency position of the band (bandwidth) of the RedCap UE.

## (Method 1-2)

This method is a method for a RedCap UE to perform a skip between PUSCH/PUCCH frequency hops.

A RedCap UE may allow PUSCH/PUCCH transmission to be skipped for time necessary for frequency retuning. A skip duration may be a continuous time duration between a 1st hop and a 2nd hop. For example, the RedCap UE may skip first N (e.g., N=1) symbol(s) of the 2nd hop upon PUSCH FH for frequency retuning. And/or, the RedCap UE may last N symbol(s) of the 1st hop upon PUSCH FH for frequency retuning. Or, the skipping may be performed at the last of the 1st hop or the first of the 2nd hop, but symbol(s) not DMRS symbol(s) may be preferentially included. For example, if a first symbol of the 2nd hop is a DMRS symbol, and there is no DMRS symbol in the last N symbol(s) of the 1st hop, the RedCap LTE may skip the last N (e.g., N=1) symbol(s) of the 1st hop upon PUSCH FH.

And/or, if the DMRS symbol is included in a skip duration, or if a complete skip duration cannot be generated by the method described above, the LTE may restarts a random access (RA) procedure starting with RA preamble retransmission, and/or perform retransmission by receiving LTL grant for Msg3 PUSCH retransmission from the base station. In the retransmission by the LTL grant, the FH may be off.

And/or, if the DMRS symbol is included in the skip duration, the RedCap UE may assume the FH off, or assume that the gap is configured.

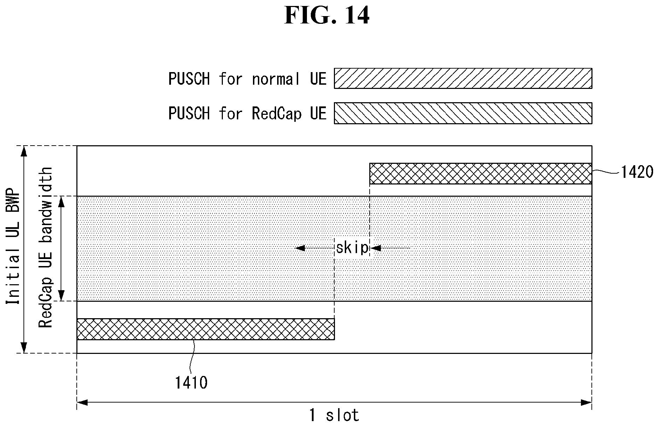

FIG. 14 illustrates an example of a method of performing a skip between PUSCH/PUCCH frequency hops.

Referring to FIG. 14, a RedCap UE bandwidth may be less than an initial UL BWP. In this case, in order to transmit PUSCH/PUCCH using frequency hopping, at least one symbol of a first frequency hop 1410 and/or at least one symbol of a second frequency hop 1420 may be skipped.

For example, a RedCap UE may transmit PUSCH (or PUCCH) in the first frequency hop 1410. And/or, the RedCap LTE may perform frequency retuning so that the second frequency hop 1420 is included in the RedCap UE bandwidth. And/or, the RedCap UE may transmit the PUSCH (or PUCCH) in the second frequency hop 1420 within the retuned RedCap LTE bandwidth. In this instance, first at least one symbol of the second frequency hop 1420 and/or last at least one symbol of the first frequency hop 1410 may be skipped.

And/or, the RedCap UE may be configured by a base station (BS) so that the first frequency hop is included in an initial RedCap UE bandwidth, and may transmit the PUSCH (or PUCCH) in the first frequency hop without frequency retuning. Or, if the first frequency hop is not included in the initial RedCap LTE bandwidth, the RedCap LTE may perform frequency retuning by BS configuration or a predefined method and transmit the PUSCH (or PUCCH) in the first frequency hop within the retuned RedCap UE bandwidth. In the present disclosure, performing the frequency retuning may mean tuning a frequency position of the RedCap UE band(width).

**(Method 1-3)**

This method is a method of selecting a skip or a gap based on an early UE identification.

In a method for a RedCap UE to perform a skip between PUSCH/PUCCH frequency hops, the reception is possible even if a base station does not know in advance whether it is the RedCap UE. However, in a method of inserting a gap, the reception is possible when the base station assumes whether there is a gap and performs blind decoding (BD) (or blind detection), or only when the base station knows in advance whether it is the RedCap UE. Therefore, based on the early LTE identification in Msg1 step, the LTE may select among the skip method and the gap insertion method and transmit Msg3 PUSCH. That is, if the RedCap LTE informs the base station that it is the RedCap UE based on Msg1 early UE identification, the RedCap UE may perform transmission in the gap insertion method in Msg3 or UL transmission after including Msg3. Alternatively, if the RedCap LTE does not inform the base station that it is the RedCap LTE based on Msg1 early LTE identification, or if the Msg1 early LTE identification is not supported, the RedCap UE may perform transmission in the skip method when retuning is required in Msg3 or UL transmission after including Msg3.

**(Method 1-4)**

This method is a method of performing a RedCap UE identification through gap BD.

As a method of distinguishing a RedCap UE in Msg3 step or a subsequent UL transmission step, the RedCap UE may always apply a method of inserting a gap between PUSCH/PUCCH frequency hops, and a base station may distinguish different UEs (type) (e.g., normal UE vs. RedCap UE) through the gap BD.

The gap BD may mean a procedure in which the base station assumes a case of inserting the gap and a case of not inserting the gap in order to determine whether the UE has inserted the gap, and attempts the reception. An indication method through the gap BD may be used as a method of transmitting additional information to the base station after performing early LTE identification in Msg1 as well as the RedCap UE identification. The additional information may be information on the number of Rx antenna branches (or ports), feature supported by the RedCap UE, etc.

**(Method 1-5)**

This method is a method of supporting a retuning gap per PUCCH format.

It is stipulated that a 2-symbol PUCCH always performs FH until dedicated PUCCH resource configuration is received. If a retuning gap is to be generated by skipping with respect to transmission accompanying the FH of the 2-symbol PUCCH, there may a problem from a coverage perspective because 50% of 2-symbol PUCCH energy is lost. Therefore, the retuning gap may be supported by allowing the FH for the 2-symbol PUCCH to be off or by inserting a gap between PUCCH symbols.

For a long PUCCH format (>= 4 symbols), both the skip method and the gap insertion method may be considered. Whether or not to apply the skip method may be determined based on a percentage or number of symbols destroyed by the skipping. For example, the skip method may be applied only when a symbol length of the long PUCCH format is greater than or equal to X symbol. For example, the supported symbol lengths of the long PUCCH format in a random access procedure for current initial access are three of 4/10/14, and the skip method may be applied only for 10-symbol and 14-symbol long PUCCHs. Alternatively, the skip method may be applied only in the long PUCCH format (e.g., PUCCH format 1) (including 4-symbol).

**Second Embodiment**

This embodiment describes a method/operation of contention resolution after a base station receives Msg3.
The base station may receive all of Msg3 PUSCHs of a normal UE and a RedCap UE in an RA procedure for initial access in an NR cell in which a normal UE and a RedCap UE coexist. In such a case, an operation of the base station based on a related art contention resolution method may be as follows. For example, in the following operation, an MAC entity is included in the base station, and the MAC entity may be replaced by the base station.
If Msg3 is transmitted, a medium access control (MAC) entity shall perform the following operation.

1> The MAC entity starts the ra-ContentionResolutionTimer and restarts the ra-ContentionResolutionTimer at each HARQ retransmission in the first symbol after the end of the Msg3 transmission.
1> The MAC entity monitors PDCCH while the ra-ContentionResolutionTimer is running regardless of the possible occurrence of a measurement gap.
1> If notification of a reception of a PDCCH transmission of the SpCell is received from lower layers:

2> > if the C-RNTI MAC CE (medium access control control element) is included in Msg3, the MAC entity performs a specific operation or a predefined operation.
2> else if the CCCH SDU is included in Msg3 and the PDCCH transmission is addressed to its TEMPORARY_C-RNTI:
3> if the MAC PDU is successfully decoded:

4> the MAC entity stops the ra-ContentionResolutionTimer.
4> if the MAC PDU contains a UE contention resolution identity MAC CE; and
4> if the UE contention resolution identity of the MAC CE matches the CCCH SDU transmitted in Msg3:

5> the MAC entity considers the contention resolution successful and finishes the disassembly and demultiplexing of the MAC PDU.
5> if the random access procedure is initiated for SI request:
6> the MAC entity indicates the reception of an acknowledgement for SI request to upper layers.
5> else:
6> the MAC entity sets C-RNTI to TEMPORARY_C-RNTI value.
5> the MAC entity discards TEMPORARY_C-RNTI.
5> the MAC entity considers the random access procedure successfully completed.

4> else:

5> the MAC entity discards TEMPORARY_C-RNTI.
5> the MAC entity considers the contention resolution unsuccessful and discards the successfully decoded MAC PDU.

1> if the ra-ContentionResolutionTimer expires:

2> the MAC entity discards TEMPORARY_C-RNTI.
2> the MAC entity considers the contention resolution unsuccessful.

1> if the contention resolution is considered unsuccessful:

2> the MAC entity flushes HARQ buffer used for the transmission of MAC PDU in the Msg3 buffer.
2> the MAC entity increases PREAMBLE_TRANSMISSION_COUNTER by 1;
2> if PREAMBLE_TRANSMISSION_COUNTER = preambleTransMax + 1,

3> the MAC entity indicates a random access problem to upper layers.
3> if this random access procedure is triggered for SI request:
4> the MAC entity considers the random access procedure unsuccessfully completed.

2> if the random access procedure is not completed:

3> if RA_TYPE is set to 4-stepRA:

4> the MAC entity selects a random backoff time according to a uniform distribution between 0 and PREAMBLE BACKOFF.

4> if the criteria (predefined criteria) to select contention-free random access resources is met during the backoff time:

5> the MAC entity performs the random access resource selection procedure.

4> else:

5> the MAC entity performs the random access resource selection procedure after the backoff time.

3> else (i.e., RA_TYPE is set to 2-stepRA):

4> if msgA-TransMax is applied, and PREAMBLE_TRANSMISSION_COUNTER = msgA-TransMax + 1:

5> the MAC entity sets RA_TYPE to 4-stepRA.

5> the MAC entity performs a specific parameter initialization on a random access type.

5> the MAC entity flushes HARQ buffer used for the transmission of MAC PDU in the MSGA buffer;

5> the MAC entity discards contention-free 2-step RA type random access resources.

5> the MAC entity performs random access resource selection.

4> else:

5> the MAC entity selects a random backoff time according to a uniform distribution between 0 and PREAMBLE BACKOFF.

5> if the criteria (predefined criteria) to select contention-free random access resources is met during the backoff time:

6> the MAC entity performs the random access resource selection procedure for 2-step RA type.

5> else:

6> the MAC entity performs the random access resource selection procedure for 2-step RA type procedure after the backoff time.

Methods 2-1 to 2-4 to be described below may use the related art contention resolution method described above, or may replace and apply all/some of the related art contention resolution method described above.

Methods described below are merely distinguished for convenience of explanation. Thus, it is obvious that configuration of any method can be substituted or combined with configuration of another method.

**(Method 2-1)**

This method is a method of preferentially transmitting Msg4 for the normal LTE.

When the normal UE and the RedCap UE attempt cell access at the same time, the base station may prioritize the normal UE. In this case, the base station may preferentially transmit Msg4 for the normal LTE. In this case, the RedCap LTE determines that the contention resolution has not succeeded according to the related art operation and restarts from RA preamble transmission.

**(Method 2-2)**

This method is a method of preferentially transmitting Msg4 for the RedCap UE.

When the normal UE and the RedCap UE attempt cell access at the same time, the base station may prioritize the RedCap UE. In this case, the base station may preferentially transmit Msg4 for the RedCap UE. In this case, on the contrary, the normal UE determines that the contention resolution has not succeeded and restarts from RA preamble transmission.

**(Method 2-3)**

This method can preferentially transmit Msg4 for any LTE.

When the normal UE and the RedCap UE attempt cell access at the same time, the base station does not prioritize a specific UE type, and may randomly select a certain UE and transmit Msg4 for the certain UE. In this case, the specific UE type does not always suffer a loss, but all the UEs (UE types) experience cell access latency on average.

**(Method 2-4)**

This method is a method of sequentially transmitting Msg4 for the normal LTE and Msg4 for the RedCap UE.

In the methods 2-1 to 2-3 mentioned above, all the UEs have transmitted Msg3 at the same time, but there may be a disadvantage in that initial access is excessively delayed for the UEs (UE types) that are not prioritized. In order to overcome the problem, multiple UEs (UE types) transmitting the Msg3 at the same time may not return to the RA preamble transmission step and may sequentially receive the Msg4 to succeed in the contention resolution,

To this end, even if Msg4 physical downlink shared channel (PDSCH) has successfully decoded, but UE IDs are not matched, the RedCap UE does not stop the ra-ContentionResolutionTimer and may continuously monitor a physical downlink control channel (PDCCH) for a reception of additional Msg4 PDSCH. Defining and operating the separate ra-ContentionResolutionTimer for the RedCap LTE for the purpose of such an operation different from the prior art may be advantageous in terms of reducing a legacy impact.

And/or, defining a new contention resolution MAC CE (medium access control control element) for the RedCap LTE may be considered. The new contention resolution MAC CE may be divided into a contention resolution MAC CE and a logical channel (LC) ID of a related art NR LTE. If it is not an LC ID corresponding to a contention resolution MAC CE of the NR UE and the RedCap UE, the NR UE and the RedCap UE may ignore it and continuously monitor the PDCCH for Msg4 PDSCH reception.

The operation for the RedCap LTE to additionally monitor the PDCCH for Msg4 PDSCH reception unlike the related art may be accompanied by additional power consumption compared to the operation of stopping the PDCCH monitoring through one Msg4 PDSCH reception as in the related art. In order to limit this additional power consumption, the total number of Msg4 PDSCHs that the RedCap LTE tries to receive may be limited to M. M may be the number of UEs (UE types) to perform one contention resolution in the Msg4 step (not returning to the RA preamble transmission) after the Msg3 transmission, and this value may be the number of UEs (UE types) coexisting in the NR cell. Alternatively, this value may be determined comprehensively considering the number of UEs (UE types) and the power consumption, and may be a value configured via higher layer via system information (e.g., SIB1, SIB1-R) by the base station or a fixed value in a predefined standard (e.g., 3GPP Specification).

For example, when it is to distinguish two types of LTEs including the normal LTE and the RedCap UE, the M value may be set to 2. In this case, if the RedCap UE successfully decodes a total of 2 Msg4 PDSCHs, the RedCap UE may stop the ra-ContentionResolutionTimer regardless of the UD ID matching and stop the PDCCH monitoring.

**Third Embodiment**

This embodiment describes a method of granting/distinguishing separate C-RNTI for a RedCap UE.

Methods described below are merely distinguished for convenience of explanation. Thus, it is obvious that configuration of any method can be substituted or combined with configuration of another method.

**(Method 3-1)**

This method is a method of granting separate C-RNTI for the RedCap UE.

After the contention resolution, a normal UE and the RedCap UE need to operate by being allocated separate cell-radio network temporary identifier (C-RNTI). Considering a legacy impact, the normal LTE may use temporary cell (TC)-RNTI as it is after a reception of contention resolution MAC CE according to the related art method.

**(Method 3-2)**

This method is a method of distinguishing C-RNTI in Msg4 step (or a subsequent step).

A method of separately granting a new C-RNTI to the RedCap UE may be required. Based on s-TMSI (System architecture evolution-Temporary Mobile Subscriber Identity) in Msg3 of the RedCap LTE, a new C-RNTI may be allocated to the RedCap LTE through a downlink radio resource control (DL RRC) setup message. Alternatively, it may be indicated whether to use a TC-RNTI as it is in the Msg4 MAC CE as the C-RNTI or to grant a new C-RNTI. The new C-RNTI may be a new C-RNTI generated through the DL RRC setup message based on the s-TMSI in the Msg3 of the RedCap UE. Alternatively, a separate C-RNTI may be a value determined (by (configurable or predefined) offset or the predefined rule) from TC-RNTI.

**(Method 3-3)**

This method is a method of distinguishing C-RNTI in Msg3 step.

For the RedCap UE separated from a legacy UE from the Msg3 step, the RedCap UE may perform operations of Msg3 scrambling using a value obtained by adding an offset to TC-RNTI received via RAR, Msg3 retransmission DCI monitoring, Msg4 reception, etc. A method of determining, as C-RNTI for the RedCap LTE, a value obtained by adding an offset to TC-RNTI immediately after the contention resolution in Msg4 step may be considered.

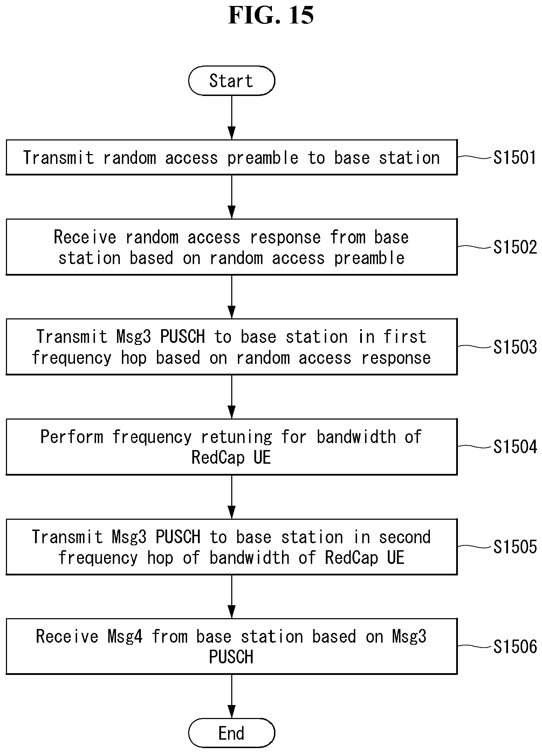

FIG. 15 is a flow chart illustrating an operation method of a UE described in the present disclosure.

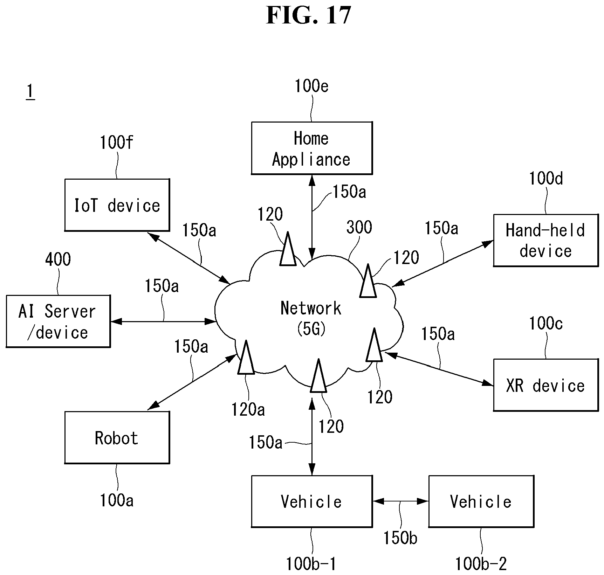

Referring to FIG. 15, first, a reduced capability (RedCap) LTE (100/200 of FIGS. 17 to 20) may transmit a random access preamble to a base station, in step S1501.

For example, the RedCap UE may refer to a UE in which a bandwidth is less than a bandwidth of an initial uplink bandwidth part (BWP). For example, a bandwidth of the RedCap UE may be 20 MHz. And/or, the bandwidth of the RedCap UE may be a maximum bandwidth supported by the RedCap UE. And/or, an operation of FIG. 15 may be performed by a normal UE as well as the RedCap UE.

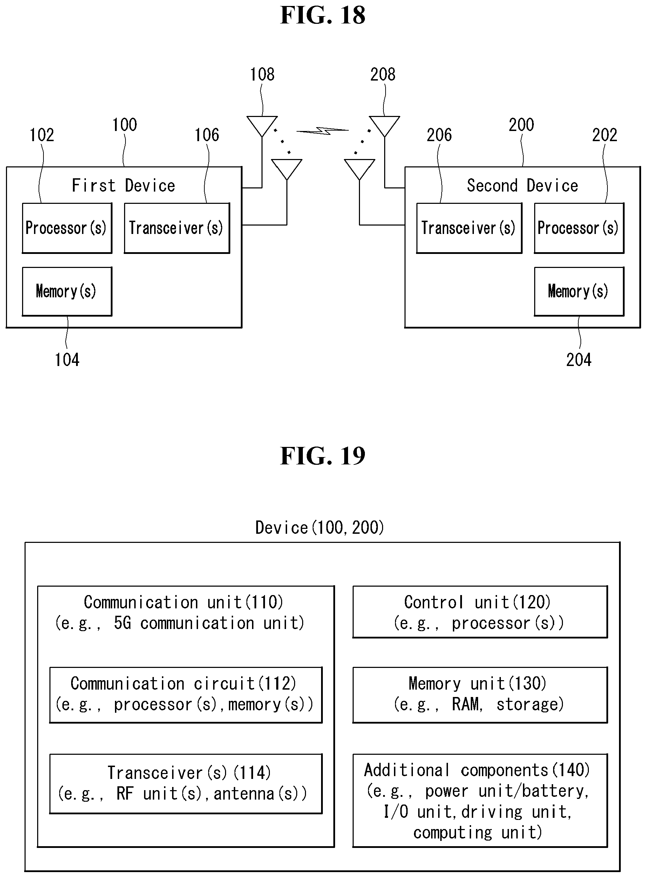

For example, an operation of the RedCap UE to transmit the random access preamble in the step S1501 may be implemented by a device of FIGS. 17 to 20. For example, referring to FIG. 18, one or more processors 102/202 may control one or more memories 104/204 and/or one or more transceivers 106/206 so as to transmit the random access preamble.

And/or, the RedCap UE (100/200 of FIGS. 17 to 20) may receive a random access response from the base station based on the random access preamble, in step S1502.

For example, an operation of the RedCap UE to receive the random access response in the step S1502 may be implemented by the device of FIGS. 17 to 20. For example, referring to FIG. 18, one or more processors 102/202 may control one or more memories 104/204 and/or one or more transceivers 106/206 so as to receive the random access response.

And/or, the RedCap UE (100/200 of FIGS. 17 to 20) may transmit, to the base station, a Msg3 physical uplink shared channel (PUSCH) in a first frequency hop based on the random access response, in step S1503. In the present disclosure, the Msg3 PUSCH may be referred to as Msg3 or PUSCH.

And/or, the RedCap UE may perform frequency retuning so that the first frequency hop is included in the bandwidth of the RedCap UE, before transmitting the Msg3 PUSCH in the first frequency hop to the base station.

For example, an operation of the RedCap UE to transmit the Msg3 PUSCH in the step S1503 may be implemented by the device of FIGS. 17 to 20. For example, referring to FIG. 18, one or more processors 102/202 may control one or more memories 104/204 and/or one or more transceivers 106/206 so as to transmit the Msg3 PUSCH.

And/or, the RedCap UE (100/200 of FIGS. 17 to 20) may perform frequency retuning for a band or the bandwidth of the RedCap UE, in step S1504.

For example, the RedCap LTE may perform frequency retuning so that the following second frequency hop is included in the bandwidth of the RedCap UE. In the present disclosure, performing the frequency retuning may mean tuning a frequency position of the band (bandwidth) of the RedCap UE.

For example, an operation of the RedCap UE to perform the frequency retuning in the step S1504 may be implemented by the device of FIGS. 17 to 20. For example, referring to FIG. 18, one or more processors 102/202 may control one or more memories 104/204 and/or one or more transceivers 106/206 so as to perform the frequency retuning.

And/or, the RedCap UE (100/200 of FIGS. 17 to 20) may transmit, to the base station, the Msg3 PUSCH in the second frequency hop of the bandwidth of the RedCap UE, in step S1505.

In particular, a gap may be inserted between the first frequency hop and the second frequency hop.

And/or, the gap may be configured through system information or the random access response. For example, the system information or the random access response may include information for a gap length. And/or, the gap may be configured in units of symbols. And/or, other gap insertion operations may refer to the method 1-1. That is, the detailed contents of the above-described operation or replaceable/changeable operations may refer to the method 1-1.

And/or, at least one symbol of the first frequency hop or at least one symbol of the second frequency hop may be skipped.

For example, based on last at least one symbol of the first frequency hop including a demodulation reference signal (DMRS) symbol, and first at least one symbol of the second frequency hop not including the DMRS symbol, the first at least one symbol of the second frequency hop may be skipped. And/or, based on the last at least one symbol of the first frequency hop not including the DMRS symbol, and the first at least one symbol of the second frequency hop including the DMRS symbol, the last at least one symbol of the first frequency hop may be skipped. That is, the RedCap UE may preferentially skip the symbol not including the DMRS symbol among the last at least one symbol of the first frequency hop and the first at least one symbol of the second frequency hop. And/or, the at least one symbol may be one symbol or two symbols. And/or, other gap insertion operations may refer to the method 1-2. That is, the detailed contents of the above-described operation or replaceable/changeable operations may refer to the method 1-2.

That is, the gap insertion operation or the skip operation may be selected by the method 1-3 or the method 1-5, and the selected operation may be performed.

And/or, the base station may distinguish the RedCap UE and the normal UE by the method 1-4. For example, the normal UE may be a UE other than the RedCap UE.

For example, an operation of the RedCap UE to transmit the Msg3 PUSCH in the step S1505 may be implemented by the device of FIGS. 17 to 20. For example, referring to FIG. 18, one or more processors 102/202 may control one or more memories 104/204 and/or one or more transceivers 106/206 so as to transmit the Msg3 PUSCH.

And/or, the RedCap UE (100/200 of FIGS. 17 to 20) may receive Msg4 from the base station based on the Msg3 PUSCH, in step S1506.

And/or, the RedCap UE may transmit, to the base station, a PUCCH for Msg4 in a first physical uplink control channel (PUCCH) frequency hop. And/or, the RedCap UE may perform frequency retuning for the bandwidth of the RedCap UE. And/or, the RedCap UE may transmit, to the base station, the PUCCH in a second PUCCH frequency hop of the bandwidth of the RedCap UE. And/or, a gap may be inserted between the first PUCCH frequency hop and the second PUCCH frequency hop. And/or, at least one symbol of the first PUCCH frequency hop or at least one symbol of the second PUCCH frequency hop may be skipped. And/or, the PUCCH may include hybrid automatic repeat request-acknowledgement (HARQ-ACK) information for the Msg4.

For example, in the skip operation, the at least one symbol of the first PUCCH frequency hop may be last at least one symbol of the first PUCCH frequency hop. And/or, the at least one symbol of the second PUCCH frequency hop may be first at least one symbol of the second PUCCH frequency hop.

And/or, the gap insertion/skip operation of the PUCCH may refer to the gap insertion/skip operation of the Msg3 PUSCH described above.

And/or, the gap insertion/skip operation of the PUCCH may be performed separately from the gap insertion/skip operation of the Msg3 PUSCH described above. That is, only the gap insertion/skip operation of the PUCCH may be performed without the gap insertion/skip operation of the Msg3 PUSCH described above.

For example, an operation of the RedCap UE to receive the Msg4 in the step S1506 may be implemented by the device of FIGS. 17 to 20. For example, referring to FIG. 18, one or more processors 102/202 may control one or more memories 104/204 and/or one or more transceivers 106/206 so as to receive the Msg4.

And/or, more details in relation to the random access procedure/process may refer to the contents described with reference to FIG. 10.

The UE operation described above has been described focusing on the 4-step RACH operation, but the proposed methods according to the present disclosure can also be applied to a 2-step RACH operation. For example, the proposed methods according to the present disclosure can also be applied to the PUCCH for MsgA PUSCH/MsgB. And/or, the 2-step RACH may refer to the contents described with reference to FIG. 11.

The UE operation described above has been described focusing on the first embodiment, but the proposed methods of the second embodiment and the third embodiment can also be applied to the LTE operation.

Since the operation of the UE described with reference to FIG. 15 is the same as the operation of the LTE described with reference to FIGS. 1 to 14 (e.g., the first to third embodiments), a detailed operation thereof is omitted.

The signaling and the operation described above may be implemented by a device (e.g., FIGS. 17 to 20) to be described below. For example, the signaling and the operation described above may be processed by one or more processors of FIGS. 17 to 20, and the signaling and the operation described above may be stored in a memory in the form of commands/programs (e.g., instructions, executable codes) for running at least one processor of FIGS. 17 to 20.

For example, a processing apparatus configured to control a RedCap UE to receive a Msg4 in a wireless communication system may comprise at least one processor, and at least one memory operably connected to the at least one processor, wherein the at least one memory may be configured to store instructions performing operations based on being executed by the at least one processor, wherein the operations may comprise transmitting a random access preamble to a base station, based on the random access preamble, receiving a random access response from the base station, based on the random access response, transmitting, to the base station, a Msg3 physical uplink shared channel (PUSCH) in a first frequency hop, performing a frequency retuning for a bandwidth of the RedCap UE, transmitting, to the base station, the Msg3 PUSCH in a second frequency hop of the bandwidth of the RedCap UE, wherein i) a gap is inserted between the first frequency hop and the second frequency hop, or ii) at least one symbol of the first frequency hop or at least one symbol of the second frequency hop is skipped, and based on the Msg3 PUSCH, receiving the Msg4 from the base station.

For example, in a computer readable storage medium storing at least one instruction, the at least one instruction may be configured to allow at least one processor to control operations based on being executed by the at least one processor, and the operations may comprise transmitting a random access preamble to a base station, based on the random access preamble, receiving a random access response from the base station, based on the random access response, transmitting, to the base station, a Msg3 physical uplink shared channel (PUSCH) in a first frequency hop, performing a frequency retuning for a bandwidth of a RedCap LTE, transmitting, to the base station, the Msg3 PUSCH in a second frequency hop of the bandwidth of the RedCap LTE, wherein i) a gap is inserted between the first frequency hop and the second frequency hop, or ii) at least one symbol of the first frequency hop or at least one symbol of the second frequency hop is skipped, and based on the Msg3 PUSCH, receiving a Msg4 from the base station.

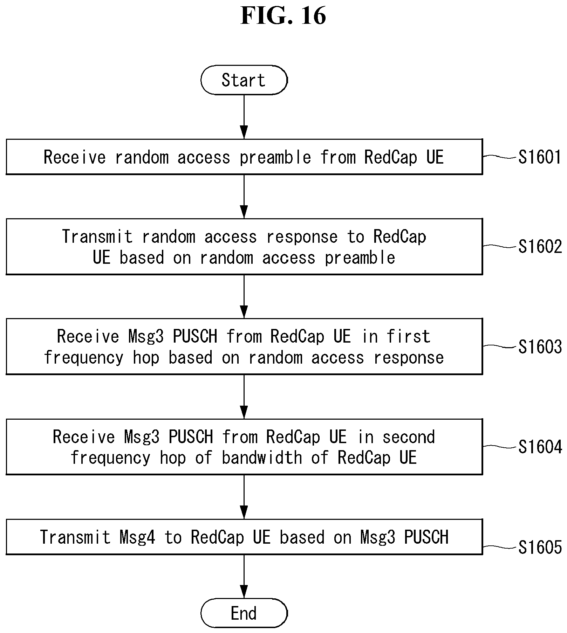

FIG. 16 is a flow chart illustrating an operation method of a base station described in the present disclosure.

Referring to FIG. 16, first, a base station (100/200 of FIGS. 17 to 20) may receive a random access preamble from a reduced capability (RedCap) UE, in step S1601.

For example, the RedCap UE may refer to a UE in which a bandwidth is less than a bandwidth of an initial uplink bandwidth part (BWP). For example, a bandwidth of the RedCap UE may be 20 MHz. And/or, the bandwidth of the RedCap UE may be a maximum bandwidth supported by the RedCap UE. And/or, in an operation of FIG. 16, the RedCap UE may be replaced by a normal LTE.

For example, an operation of the base station to receive the random access preamble in the step S1601 may be implemented by a device of FIGS. 17 to 20. For example, referring to FIG. 18, one or more processors 102/202 may control one or more memories 104/204 and/or one or more transceivers 106/206 so as to receive the random access preamble.

And/or, the base station (100/200 of FIGS. 17 to 20) may transmit a random access response to the RedCap UE based on the random access preamble, in step S1602.

For example, an operation of the base station to transmit the random access response in the step S1602 may be implemented by the device of FIGS. 17 to 20. For example, referring to FIG. 18, one or more processors 102/202 may control one or more memories 104/204 and/or one or more transceivers 106/206 so as to transmit the random access response.

And/or, the base station (100/200 of FIGS. 17 to 20) may receive, from the RedCap UE, a Msg3 physical uplink shared channel (PUSCH) in a first frequency hop based on the random access response, in step S1603. In the present disclosure, the Msg3 PUSCH may be referred to as Msg3 or PUSCH.

And/or, the RedCap UE may perform frequency retuning so that the first frequency hop is included in the bandwidth of the RedCap UE, before transmitting the Msg3 PUSCH in the first frequency hop to the base station.

For example, an operation of the base station to receive the Msg3 PUSCH in the step S1603 may be implemented by the device of FIGS. 17 to 20. For example, referring to FIG. 18, one or more processors 102/202 may control one or more memories 104/204 and/or one or more transceivers 106/206 so as to receive the Msg3 PUSCH.

And/or, frequency retuning for the bandwidth of the RedCap UE may be performed. For example, the RedCap LTE may perform frequency retuning so that the following second frequency hop is included in a band or the bandwidth of the RedCap UE. In the present disclosure, performing the frequency retuning may mean tuning a frequency position of the band (bandwidth) of the RedCap UE.

And/or, the base station (100/200 of FIGS. 17 to 20) may receive, from the RedCap UE, the Msg3 PUSCH in the second frequency hop of the bandwidth of the RedCap UE, in step S1604.

In particular, a gap may be inserted between the first frequency hop and the second frequency hop.

And/or, the gap may be configured through system information or the random access response. For example, the system information or the random access response may include information for a gap length. And/or, the gap may be configured in units of symbols. And/or, other gap insertion operations may refer to the method 1-1. That is, the detailed contents of the above-described operation or replaceable/changeable operations may refer to the method 1-1.

And/or, at least one symbol of the first frequency hop or at least one symbol of the second frequency hop may be skipped.

For example, based on last at least one symbol of the first frequency hop including a demodulation reference signal (DMRS) symbol, and first at least one symbol of the second frequency hop not including a DMRS symbol, the first at least one symbol of the second frequency hop may be skipped. And/or, based on the last at least one symbol of the first frequency hop not including the DMRS symbol, and the first at least one symbol of the second frequency hop including the DMRS symbol, the last at least one symbol of the first frequency hop may be skipped. That is, the RedCap UE may preferentially skip the symbol not including the DMRS symbol among the last at least one symbol of the first frequency hop and the first at least one symbol of the second frequency hop. And/or, the at least one symbol may be one symbol or two symbols. And/or, other gap insertion operations may refer to the method 1-2. That is, the detailed contents of the above-described operation or replaceable/changeable operations may refer to the method 1-2.

That is, the gap insertion operation or the skip operation may be selected by the method 1-3 or the method 1-5, and the selected operation may be performed.

And/or, the base station may distinguish the RedCap UE and the normal UE by the method 1-4. For example, the normal UE may be a UE other than the RedCap UE.

For example, an operation of the base station to receive the Msg3 PUSCH in the step S1604 may be implemented by the device of FIGS. 17 to 20. For example, referring to FIG. 18, one or more processors 102/202 may control one or more memories 104/204 and/or one or more transceivers 106/206 so as to receive the Msg3 PUSCH.

And/or, the base station (100/200 of FIGS. 17 to 20) may transmit Msg4 to the RedCap UE based on the Msg3 PUSCH, in step S1605.

And/or, the base station may receive, from the RedCap LTE, a PUCCH for Msg4 in a first physical uplink control channel (PUCCH) frequency hop. And/or, frequency retuning for the bandwidth of the RedCap UE may be performed. And/or, the base station may receive, from the RedCap UE, the PUCCH in a second PUCCH frequency hop of the bandwidth of the RedCap UE. And/or, a gap may be inserted between the first PUCCH frequency hop and the second PUCCH frequency hop. And/or, at least one symbol of the first PUCCH frequency hop or at least one symbol of the second PUCCH frequency hop may be skipped. And/or, the PUCCH may include hybrid automatic repeat request-acknowledgement (HARQ-ACK) information for the Msg4.

For example, in the skip operation, the at least one symbol of the first PUCCH frequency hop may be last at least one symbol of the first PUCCH frequency hop. And/or, the at least one symbol of the second PUCCH frequency hop may be first at least one symbol of the second PUCCH frequency hop.

And/or, the gap insertion/skip operation/method of the PUCCH may refer to the gap insertion/skip operation/method of the Msg3 PUSCH described above.

And/or, the gap insertion/skip operation/method of the PUCCH may be performed separately from the gap insertion/skip operation/method of the Msg3 PUSCH described above. That is, only the gap insertion/skip operation of the PUCCH may be performed without the gap insertion/skip operation of the Msg3 PUSCH described above.

For example, an operation of the base station to transmit the Msg4 in the step S1605 may be implemented by the device of FIGS. 17 to 20. For example, referring to FIG. 18, one or more processors 102/202 may control one or more memories 104/204 and/or one or more transceivers 106/206 so as to transmit the Msg4.

And/or, more details in relation to the random access procedure/process may refer to the contents described with reference to FIG. 10.

The BS operation described above has been described focusing on the 4-step RACH operation, but the proposed methods according to the present disclosure can also be applied to a 2-step RACH operation. For example, the proposed methods according to the present disclosure can also be applied to the PUCCH for MsgA PUSCH/MsgB. And/or, the 2-step RACH may refer to the contents described with reference to FIG. 11.

The BS operation described above has been described focusing on the first embodiment, but the proposed methods of the second embodiment and the third embodiment can also be applied to the BS operation.

Since the operation of the BS described with reference to FIG. 16 is the same as the operation of the BS described with reference to FIGS. 1 to 15 (e.g., the first to third embodiments), a detailed operation thereof is omitted.

The signaling and the operation described above may be implemented by a device (e.g., FIGS. 17 to 20) to be described below. For example, the signaling and the operation described above may be processed by one or more processors of FIGS. 17 to 20, and the signaling and the operation described above may be stored in a memory in the form of commands/programs (e.g., instructions, executable codes) for running at least one processor of FIGS. 17 to 20.

For example, a processing apparatus configured to control a base station to transmit a Msg4 in a wireless communication system may comprise at least one processor, and at least one memory operably connected to the at least one processor, wherein the at least one memory may be configured to store instructions performing operations based on being executed by the at least one processor, wherein the operations may comprise receiving a random access preamble from a RedCap LTE, based on the random access preamble, transmitting a random access response to the RedCap UE, based on the random access response, receiving, from the RedCap UE, a Msg3 physical uplink shared channel (PUSCH) in a first frequency hop, wherein a frequency retuning for a bandwidth of the RedCap LTE is performed, receiving, from the RedCap UE, the Msg3 PUSCH in a second frequency hop of the bandwidth of the RedCap UE, wherein i) a gap is inserted between the first frequency hop and the second frequency hop, or ii) at least one symbol of the first frequency hop or at least one symbol of the second frequency hop is skipped, and based on the Msg3 PUSCH, transmitting the Msg4 to the RedCap UE.

For example, in a computer readable storage medium storing at least one instruction, the at least one instruction may be configured to allow at least one processor to control operations based on being executed by the at least one processor, and the operations may comprise receiving a random access preamble from a RedCap UE, based on the random access preamble, transmitting a random access response to the RedCap LTE, based on the random access response, receiving, from the RedCap UE, a Msg3 physical uplink shared channel (PUSCH) in a first frequency hop, wherein a frequency retuning for a bandwidth of the RedCap LTE is performed, receiving, from the RedCap LTE, the Msg3 PUSCH in a second frequency hop of the bandwidth of the RedCap UE, wherein i) a gap is inserted between the first frequency hop and the second frequency hop, or ii) at least one symbol of the first frequency hop or at least one symbol of the second frequency hop is skipped, and based on the Msg3 PUSCH, transmitting the Msg4 to the RedCap UE.

## Communication system applied to the disclosure

The various descriptions, functions, procedures, proposals, methods, and/or operational flowcharts of the disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 17 illustrates a communication system (1) applied to the disclosure.

Referring to FIG. 17, a communication system applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. Relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

## Devices applicable to the disclosure

FIG. 18 illustrates wireless devices applicable to the disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include at least one processor 202 and at least one memory 204 and additionally further include at least one transceiver 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. From RF band signals into baseband signals in order to process received user data, control information, radio signals/channels, etc. Using the one or more processors 102 and 202. The one or more transceivers 106 and 206 may convert the user data, control information, radio signals/channels, etc. Processed using the one or more processors 102 and 202 from the base band signals into the RF band signals. To this end, the one or more transceivers 106 and 206 may include (analog) oscillators and/or filters.

## Example of a wireless device applied to the disclosure

FIG. 19 illustrates another example of a wireless device applied to the disclosure. The wireless device may be implemented in various forms according to a use-case/service.

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 104 of FIG. 18. For example, the transceiver(s) 114 may include the one or more transceivers 106 and 106 and/or the one or more antennas 108 and 108 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110).

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

## Portable Device Example to Which Disclosure is Applied

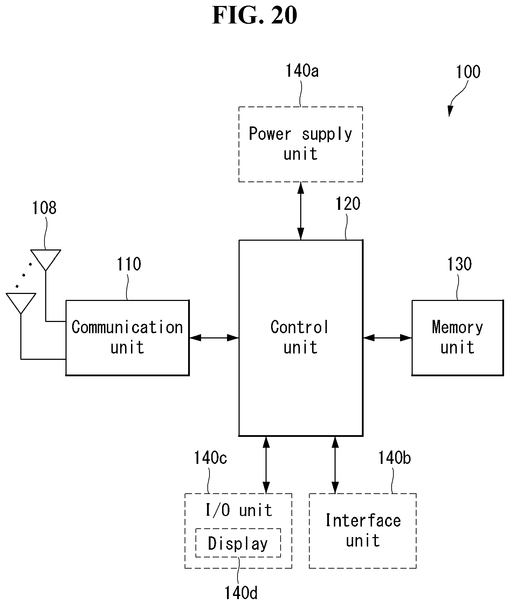

FIG. 20 illustrates a portable device applied to the disclosure. The portable device may include a smart phone, a smart pad, a wearable device (e.g., a smart watch, a smart glass), and a portable computer (e.g., a notebook, etc.). The portable device may be referred to as a Mobile Station (MS), a user terminal (UT), a Mobile Subscriber Station (MSS), a Subscriber Station (SS), an Advanced Mobile Station (AMS), or a Wireless terminal (WT).

Referring to FIG. 20, a portable device 100 may include an antenna unit 108, a communication unit 110, a control unit 120, a memory unit 130, a power supply unit 140a, an interface unit 140b, and an input/output unit 140c. The antenna unit 108 may be configured as a part of the communication unit 110. The blocks 110 to 130/140a to 140c correspond to the blocks 110 to 130/140 of FIG. 19, respectively.

The communication unit 110 may transmit/receive a signal (e.g., data, a control signal, etc.) to/from another wireless device and eNBs. The control unit 120 may perform various operations by controlling components of the portable device 100. The control unit 120 may include an Application Processor (AP). The memory unit 130 may store data/parameters/programs/codes/instructions required for driving the portable device 100. Further, the memory unit 130 may store input/output data/information, etc. The power supply unit 140a may supply power to the portable device 1010 and include a wired/wireless charging circuit, a battery, and the like. The interface unit 140b may support a connection between the portable device 100 and another external device. The interface unit 140b may include various ports (e.g., an audio input/output port, a video input/output port) for the connection with the external device. The input/output unit 140c may receive or output a video information/signal, an audio information/signal, data, and/or information input from a user. The input/output unit 140c may include a camera, a microphone, a user input unit, a display unit 140d, a speaker, and/or a haptic module.

As one example, in the case of data communication, the input/output unit 140c may acquire information/signal (e.g., touch, text, voice, image, and video) input from the user and the acquired information/signal may be stored in the memory unit 130. The communication unit 110 may transform the information/signal stored in the memory into the radio signal and directly transmit the radio signal to another wireless device or transmit the radio signal to the eNB. Further, the communication unit 110 may receive the radio signal from another wireless device or eNB and then reconstruct the received radio signal into original information/signal. The reconstructed information/signal may be stored in the memory unit 130 and then output in various forms (e.g., text, voice, image, video, haptic) through the input/output unit 140c.

In this case, a wireless communication technology implemented in the wireless device 100, 200 of the present disclosure may include Narrowband Internet of Things for low energy communication in addition to LTE, NR and 6G. In this case, for example, the NB-IoT technology may be an example of a Low Power Wide Area Network (LPWAN) technology, and may be implemented by standards, such as LTE Cat NB1 and/or LTE Cat NB2, and the present disclosure is not limited to the aforementioned names. Additionally or alternatively, a wireless communication technology implemented in a wireless device (100, 200) of the present disclosure may perform communication based on the LTE-M technology. In this case, for example, the LTE-M technology may be an example of the LPWAN technology and may be called various names, such as enhanced Machine Type Communication (eMTC). For example, the LTE-M technology may be implemented by at least any one of various standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and the present disclosure is not limited to the aforementioned names. Additionally or alternatively, a wireless communication technology implemented in a wireless device (100, 200) of the present disclosure may include at least any one of ZigBee, Bluetooth and a Low Power Wide Area Network (LPWAN) in which low energy communication is considered, and the present disclosure is not limited to the aforementioned names. For example, the ZigBee technology may generate a personal area networks (PAN) related to small/low-power digital communication based on various standards, such as IEEE 802.15.4, and may be called various names.

The embodiments described above are implemented by combinations of components and features of the disclosure in predetermined forms. Each component or feature should be considered selectively unless specified separately. Each component or feature may be carried out without being combined with another component or feature. Moreover, some components and/or features are combined with each other and may implement embodiments of the disclosure. The order of operations described in embodiments of the disclosure may be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.

Embodiments of the disclosure may be implemented by various means, for example, hardware, firmware, software, or combinations thereof. When embodiments are implemented by hardware, one embodiment of the disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the disclosure may be implemented by modules, procedures, functions, etc. Performing functions or operations described above. Software code may be stored in a memory and may be driven by a processor. The memory is provided inside or outside the processor and may exchange data with the processor by various well-known means.

It is apparent to those skilled in the art that the disclosure may be embodied in other specific forms without departing from essential features of the disclosure. Accordingly, the aforementioned detailed description should not be construed as limiting in all aspects and should be considered as illustrative. The scope of the disclosure should be determined by rational construing of the appended claims, and all modifications within an equivalent scope of the disclosure are included in the scope of the disclosure.

Although the method of transmitting and receiving Msg4 in the wireless communication system of the present disclosure has been described in connection with examples in which it applies to 3GPP LTE/LTE-A system and 5G systems (new RAT systems), the method is also applicable to other various wireless communication systems such as Beyond 5G, 6G, and Beyond 6G.

**Claims**

1. A method of a reduced capability (RedCap) user equipment (UE) for receiving a message (Msg)4 in a wireless communication system, the method comprising:

   transmitting a random access preamble to a base station;
   based on the random access preamble, receiving a random access response from the base station;
   based on the random access response, transmitting, to the base station, a Msg3 physical uplink shared channel (PUSCH) in a first frequency hop;
   performing a frequency retuning for a bandwidth of the RedCap UE;
   transmitting, to the base station, the Msg3 PUSCH in a second frequency hop of the bandwidth of the RedCap LTE, wherein i) a gap is inserted between the first frequency hop and the second frequency hop, or ii) at least one symbol of the first frequency hop or at least one symbol of the second frequency hop is skipped; and
   based on the Msg3 PUSCH, receiving the Msg4 from the base station.

2. The method of claim 1, wherein the bandwidth of the RedCap UE is less than a bandwidth of an initial uplink bandwidth part (BWP).

3. The method of claim 1, wherein the bandwidth of the RedCap UE is a maximum bandwidth supported by the RedCap UE.

4. The method of claim 1, wherein the gap is configured through system information or the random access response.

5. The method of claim 1, wherein based on last at least one symbol of the first frequency hop including a demodulation reference signal (DMRS) symbol, and first at least one symbol of the second frequency hop not including the DMRS symbol, the first at least one symbol of the second frequency hop is skipped.

6. The method of claim 1, wherein based on last at least one symbol of the first frequency hop not including a demodulation reference signal (DMRS) symbol, and first at least one symbol of the second frequency hop including the DMRS symbol, the last at least one symbol of the first frequency hop is skipped.

7. The method of claim 1, further comprising:

   transmitting, to the base station, a physical uplink control channel (PUCCH) for the Msg4 in a first PUCCH frequency hop;
   performing the frequency retuning for the bandwidth of the RedCap UE; and
   transmitting, to the base station, the PUCCH in a second PUCCH frequency hop of the bandwidth of the RedCap UE,
   wherein i) a gap is inserted between the first PUCCH frequency hop and the second PUCCH frequency hop, or ii) at least one symbol of the first PUCCH frequency hop or at least one symbol of the second PUCCH frequency hop is skipped.

8. The method of claim 7, wherein the PUCCH includes hybrid automatic repeat request-acknowledgement (HARQ-ACK) information for the Msg4.

9. A reduced capability (RedCap) user equipment (UE) configured to receive a message (Msg)4 in a wireless communication system, the RedCap LTE comprising:

   at least one transceiver;

at least one processor; and
at least one memory operably connected to the at least one processor,
wherein the at least one memory is configured to store instructions performing operations based on being executed by the at least one processor,
wherein the operations comprise:

transmitting a random access preamble to a base station;
based on the random access preamble, receiving a random access response from the base station;
based on the random access response, transmitting, to the base station, a Msg3 physical uplink shared channel (PUSCH) in a first frequency hop;
performing a frequency retuning for a bandwidth of the RedCap UE;
transmitting, to the base station, the Msg3 PUSCH in a second frequency hop of the bandwidth of the RedCap LTE, wherein i) a gap is inserted between the first frequency hop and the second frequency hop, or ii) at least one symbol of the first frequency hop or at least one symbol of the second frequency hop is skipped; and
based on the Msg3 PUSCH, receiving the Msg4 from the base station.

10. A method of a base station for transmitting a message (Msg)4 in a wireless communication system, the method comprising:

receiving a random access preamble from a reduced capability (RedCap) user equipment (UE);
based on the random access preamble, transmitting a random access response to the RedCap UE;
based on the random access response, receiving, from the RedCap UE, a Msg3 physical uplink shared channel (PUSCH) in a first frequency hop, wherein a frequency retuning for a bandwidth of the RedCap UE is performed;
receiving, from the RedCap UE, the Msg3 PUSCH in a second frequency hop of the bandwidth of the RedCap LTE, wherein i) a gap is inserted between the first frequency hop and the second frequency hop, or ii) at least one symbol of the first frequency hop or at least one symbol of the second frequency hop is skipped; and
based on the Msg3 PUSCH, transmitting the Msg4 to the RedCap UE.

11. The method of claim 10, wherein the bandwidth of the RedCap UE is less than a bandwidth of an initial uplink bandwidth part (BWP).

12. The method of claim 10, wherein the bandwidth of the RedCap UE is a maximum bandwidth supported by the RedCap UE.

13. The method of claim 10, wherein the gap is configured through system information or the random access response.

14. The method of claim 10, wherein based on last at least one symbol of the first frequency hop including a demodulation reference signal (DMRS) symbol, and first at least one symbol of the second frequency hop not including the DMRS symbol, the first at least one symbol of the second frequency hop is skipped.

15. The method of claim 10, wherein based on last at least one symbol of the first frequency hop not including a demodulation reference signal (DMRS) symbol, and first at least one symbol of the second frequency hop including the DMRS symbol, the last at least one symbol of the first frequency hop is skipped.

16. The method of claim 10, further comprising:

receiving, from the RedCap UE, a physical uplink control channel (PUCCH) for the Msg4 in a first PUCCH frequency hop, wherein the frequency retuning for the bandwidth of the RedCap UE is performed; and
receiving, from the RedCap UE, the PUCCH in a second PUCCH frequency hop of the bandwidth of the RedCap UE,
wherein i) a gap is inserted between the first PUCCH frequency hop and the second PUCCH frequency hop, or ii) at least one symbol of the first PUCCH frequency hop or at least one symbol of the second PUCCH frequency hop is skipped.

17. The method of claim 10, wherein the PUCCH includes hybrid automatic repeat request-acknowledgement (HARQ-ACK) information for the Msg4.

18. A base station configured to transmit a message (Msg)4 in a wireless communication system, the base station comprising:

    at least one transceiver;
    at least one processor; and
    at least one memory operably connected to the at least one processor,
    wherein the at least one memory is configured to store instructions performing operations based on being executed by the at least one processor,
    wherein the operations comprise:

        receiving a random access preamble from a reduced capability (RedCap) user equipment (UE);
        based on the random access preamble, transmitting a random access response to the RedCap UE;
        based on the random access response, receiving, from the RedCap UE, a Msg3 physical uplink shared channel (PUSCH) in a first frequency hop, wherein a frequency retuning for a bandwidth of the RedCap UE is performed;
        receiving, from the RedCap UE, the Msg3 PUSCH in a second frequency hop of the bandwidth of the RedCap LTE, wherein i) a gap is inserted between the first frequency hop and the second frequency hop, or ii) at least one symbol of the first frequency hop or at least one symbol of the second frequency hop is skipped; and
        based on the Msg3 PUSCH, transmitting the Msg4 to the RedCap UE.

19. A processing apparatus configured to control a reduced capability (RedCap) user equipment (UE) to receive a message (Msg)4 in a wireless communication system, the processing apparatus comprising:

    at least one processor; and
    at least one memory operably connected to the at least one processor,
    wherein the at least one memory is configured to store instructions performing operations based on being executed by the at least one processor,
    wherein the operations comprise:

        transmitting a random access preamble to a base station;
        based on the random access preamble, receiving a random access response from the base station;
        based on the random access response, transmitting, to the base station, a Msg3 physical uplink shared channel (PUSCH) in a first frequency hop;
        performing a frequency retuning for a bandwidth of the RedCap UE;
        transmitting, to the base station, the Msg3 PUSCH in a second frequency hop of the bandwidth of the RedCap LTE, wherein i) a gap is inserted between the first frequency hop and the second frequency hop, or ii) at least one symbol of the first frequency hop or at least one symbol of the second frequency hop is skipped; and
        based on the Msg3 PUSCH, receiving the Msg4 from the base station.

20. A computer readable storage medium storing at least one instruction,

    wherein the at least one instruction is configured to allow at least one processor to control operations based on being executed by the at least one processor,
    wherein the operations comprise:

        transmitting a random access preamble to a base station;
        based on the random access preamble, receiving a random access response from the base station;
        based on the random access response, transmitting, to the base station, a message (Msg)3 physical uplink shared channel (PUSCH) in a first frequency hop;
        performing a frequency retuning for a bandwidth of a reduced capability (RedCap) user equipment (UE);
        transmitting, to the base station, the Msg3 PUSCH in a second frequency hop of the bandwidth of the RedCap LTE, wherein i) a gap is inserted between the first frequency hop and the second frequency hop, or ii) at least one symbol of the first frequency hop or at least one symbol of the second frequency hop is skipped; and
        based on the Msg3 PUSCH, receiving a Msg4 from the base station.

# FIG. 1

NGC

NG-C/U

NG-C/U

NG-C/U

NG-C/U

Xn

gNB

Xn

Xn

gNB

NG-RAN

gNB

AMF/UPF

AMF/UPF

# FIG. 2

| DOWNLINK FRAME i |
| --- |

| UPLINK FRAME i |
| --- |

$N_{TA}T_s$

# FIG. 3

Radio Frame 10ms

Fixed Size

Subframe 1ms

| 0 | 1 | 2 | 3 | 4 | 5 | 6 | 7 | 8 | 9 |

Subframe ={1,2,4} Slots

Size depends on subcarrier spacing

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols - ffs

EP 4 280 791 A1

# FIG. 4

ONE SUBFRAME

$14 \cdot 2^{\mu}$ OFDM SYMBOLS

$k = N_{RB}^{\mu} N_{SC}^{RB} - 1$

RESOURCE BLOCK

RESOURCE ELEMENT
- $(k, \bar{l})$ IN CASE OF RESOURCE GRID
- $(k, l)$ IN CASE OF RESOURCE BLOCK

$N_{RB}^{\mu} N_{SC}^{RB} - 1$ SUBCARRIERS

$N_{SC}^{RB}$ SUBCARRIERS

$k = 0$

$l = 0$

$l = 14 \cdot 2^{\mu} - 1$

## FIG. 5

# FIG. 6

ANTENNA PORT A
ANTENNA PORT B } NUMEROLOGY X

ANTENNA PORT A
ANTENNA PORT B } NUMEROLOGY Y

# FIG. 7

EP 4 280 791 A1

INITIAL CELL SEARCH — S701 — PSS/SSS& [DLRS]& PBCH

SYSTEM INFORMATION RECEPTION — S702 — PDCCH/ PDSCH (BCCH)

RANDOM ACCESS PROCEDURE — S703 PRACH — S704 PDCCH/ PDSCH — S705 PUSCH — S706 PDCCH/ PDSCH

GENERAL DL/UL Tx/Rx — S707 PDCCH/ PDSCH — S708 PUSCH/ PUCCH

· DL/UL ACK/NACK
· UE CQI/PMI RI REPORT USING PUSCH AND PUCCH

# FIG. 8

**FIG. 9**

SSB periodicity(default:20ms)

| 5ms window | | | | |

SSB#1  SSB#2  · · ·  SSB#L

SSB burst set

# FIG. 10

Msg1 : random access preamble — 1701

Msg2 : random access response — 1703

Msg3 : scheduled transmission on PUSCH — 1705

Msg4 : contention resoultion — 1707

(a)

Msg.2:RA response

Msg.4:RRC connection setup

BS

No response

No response

. . .

Power Ramping

Power Ramping

. . .

UE

Msg.1

Msg.3: RRC connection Request

RRC connected

(b)

# FIG. 11

(a)

(b)

# FIG. 12

# FIG. 13

## FIG. 14

PUSCH for normal UE

PUSCH for RedCap UE

# FIG. 15

Start

Transmit random access preamble to base station —S1501

Receive random access response from base station based on random access preamble —S1502

Transmit Msg3 PUSCH to base station in first frequency hop based on random access response —S1503

Perform frequency retuning for bandwidth of RedCap UE —S1504

Transmit Msg3 PUSCH to base station in second frequency hop of bandwidth of RedCap UE —S1505

Receive Msg4 from base station based on Msg3 PUSCH —S1506

End

# FIG. 16

```
                    ( Start )
                        │
                        ▼
┌───────────────────────────────────────────────┐
│  Receive random access preamble from RedCap UE │——— S1601
└───────────────────────────────────────────────┘
                        │
                        ▼
┌───────────────────────────────────────────────┐
│    Transmit random access response to RedCap   │——— S1602
│      UE based on random access preamble        │
└───────────────────────────────────────────────┘
                        │
                        ▼
┌───────────────────────────────────────────────┐
│   Receive Msg3 PUSCH from RedCap UE in first   │——— S1603
│    frequency hop based on random access response│
└───────────────────────────────────────────────┘
                        │
                        ▼
┌───────────────────────────────────────────────┐
│   Receive Msg3 PUSCH from RedCap UE in second  │——— S1604
│     frequency hop of bandwidth of RedCap UE    │
└───────────────────────────────────────────────┘
                        │
                        ▼
┌───────────────────────────────────────────────┐
│   Transmit Msg4 to RedCap UE based on Msg3 PUSCH│——— S1605
└───────────────────────────────────────────────┘
                        │
                        ▼
                    (  End  )
```

# FIG. 17

# FIG. 18

# FIG. 19

Device(100, 200)

| Communication unit(110)<br>(e.g., 5G communication unit) | Control unit(120)<br>(e.g., processor(s)) |
| --- | --- |
| Communication circuit(112)<br>(e.g., processor(s),memory(s)) | Memory unit(130)<br>(e.g., RAM, storage) |
| Transceiver(s)(114)<br>(e.g., RF unit(s),antenna(s)) | Additional components(140)<br>(e.g., power unit/battery,<br>I/O unit,driving unit,<br>computing unit) |

EP 4 280 791 A1

# FIG. 20

140a

Power supply
unit

108

110

Communication
unit

120

Control
unit

130

Memory
unit

100

140c

I/O unit

Display

140d

140b

Interface
unit

58

## INTERNATIONAL SEARCH REPORT

| International application No. |
| --- |
| **PCT/KR2022/000734** |

### A. CLASSIFICATION OF SUBJECT MATTER

**H04W 74/08**(2009.01)i; **H04W 74/00**(2009.01)i; **H04W 72/12**(2009.01)i; **H04W 72/04**(2009.01)i; **H04L 5/00**(2006.01)i

According to International Patent Classification (IPC) or to both national classification and IPC

### B. FIELDS SEARCHED

Minimum documentation searched (classification system followed by classification symbols)

H04W 74/08(2009.01); H04W 36/00(2009.01); H04W 48/16(2009.01); H04W 60/00(2009.01); H04W 74/00(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 액세스(random access), 감소된 성능 단말(reduced capability UE), 주파수 홉(frequency hop), 주파수 재조정(frequency retuning)

### C. DOCUMENTS CONSIDERED TO BE RELEVANT

| Category* | Citation of document, with indication, where appropriate, of the relevant passages | Relevant to claim No. |
| --- | --- | --- |
| Y <br> A | ERICSSON. Potential UE complexity reduction features for RedCap. R1-2008837, 3GPP TSG-RAN WG1 Meeting #103-e. Online. 01 November 2020. <br> See pages 23-25 and 39-40. | 1-4,7-13,16-20 <br> 5-6,14-15 |
| Y | LENOVO et al. On UE complexity reduction features for RedCap. R1-2005830, 3GPP TSG RAN WG1 Meeting #102e, E-meeting. 07 August 2020. <br> See section 2.1; and figure 1. | 1-4,7-13,16-20 |
| A | KR 10-2017-0067725 A (INTERDIGITAL PATENT HOLDINGS, INC.) 16 June 2017 (2017-06-16) <br> See paragraph [0091]; and figure 2. | 1-20 |
| A | KR 10-2020-0088667 A (SAMSUNG ELECTRONICS CO., LTD.) 23 July 2020 (2020-07-23) <br> See paragraphs [0002]-[0252]. | 1-20 |
| A | WO 2019-099694 A1 (QUALCOMM INCORPORATED) 23 May 2019 (2019-05-23) <br> See claims 1-3. | 1-20 |

☐ Further documents are listed in the continuation of Box C.　　☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **26 April 2022** | **02 May 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

| INTERNATIONAL SEARCH REPORT | | International application No. |
| --- | --- | --- |
| Information on patent family members | | **PCT/KR2022/000734** |

| Patent document cited in search report | | | Publication date (day/month/year) | Patent family member(s) | | | Publication date (day/month/year) |
| --- | --- | --- | --- | --- | --- | --- | --- |
| KR | 10-2017-0067725 | A | 16 June 2017 | CN | 107079499 | A | 18 August 2017 |
| | | | | CN | 107079499 | B | 02 June 2020 |
| | | | | CN | 111629449 | A | 04 September 2020 |
| | | | | CN | 111642026 | A | 08 September 2020 |
| | | | | EP | 3180955 | A1 | 21 June 2017 |
| | | | | EP | 3180955 | B1 | 14 August 2019 |
| | | | | EP | 3562249 | A1 | 30 October 2019 |
| | | | | IL | 250551 | A | 29 August 2019 |
| | | | | IL | 250551 | B | 29 August 2019 |
| | | | | IL | 250551 | D0 | 30 March 2017 |
| | | | | JP | 2017-530605 | A | 12 October 2017 |
| | | | | JP | 2020-188502 | A | 19 November 2020 |
| | | | | JP | 6937685 | B2 | 22 September 2021 |
| | | | | KR | 10-2022-0039816 | A | 29 March 2022 |
| | | | | US | 10306680 | B2 | 28 May 2019 |
| | | | | US | 10674544 | B2 | 02 June 2020 |
| | | | | US | 2017-0280481 | A1 | 28 September 2017 |
| | | | | US | 2019-0239255 | A1 | 01 August 2019 |
| | | | | US | 2020-0275496 | A1 | 27 August 2020 |
| | | | | WO | 2016-025899 | A1 | 18 February 2016 |
| KR | 10-2020-0088667 | A | 23 July 2020 | CN | 113302957 | A | 24 August 2021 |
| | | | | EP | 3831108 | A1 | 09 June 2021 |
| | | | | US | 2020-0229076 | A1 | 16 July 2020 |
| | | | | WO | 2020-149639 | A1 | 23 July 2020 |
| WO | 2019-099694 | A1 | 23 May 2019 | CN | 111345051 | A | 26 June 2020 |
| | | | | EP | 3711360 | A1 | 23 September 2020 |
| | | | | US | 10904789 | B2 | 26 January 2021 |
| | | | | US | 2019-0150031 | A1 | 16 May 2019 |